# EUROPEAN PATENT APPLICATION

(11) **EP 3 691 373 A1**
(43) Date of publication of application: **05.08.2020**
(21) Application number: 18861183.4
(22) Date of filing: 25.09.2018
(51) Int. Cl.: H04W 72/04, H04W 88/06

(54) **USER EQUIPMENT AND INTERFERENCE CONTROL METHOD**

(30) Priority: 27.09.2017 JP 2017187192
(71) Applicant: NTT DOCOMO, INC., Chiyoda-ku Tokyo 100-6150 (JP)
(72) Inventor: TAKAHASHI, Hideaki, Tokyo 100-6150 (JP); UMEDA, Hiromasa, Tokyo 100-6150 (JP); HAPSARI, Wuri Andarmawanti, Tokyo 100-6150 (JP); UCHINO, Tooru, Tokyo 100-6150 (JP); ANDOU, Kei, Tokyo 100-6150 (JP)
(74) Representative: Hoffmann Eitle
(86) International application number: PCT/JP2018/035460
(87) International publication number: WO 2019/065634

(57) **Abstract**

There is provided user equipment including a controller that controls a radio communication with a base station; and a transmitter that reports, to the base station, interfered system information representing an interfered system that is interfered by multi-Radio Access Technology (RAT) dual connectivity.

## Description

### TECHNICAL FIELD

The present invention relates to a radio communication system.

### BACKGROUND ART

In Third Generation Partnership Project (3GPP), enhancement of functionality has been attempted for the Long Term Evolution (LTE) system and the LTE-Advanced system. Currently, introduction of uplink carrier aggregation (Uplink Carrier Aggregation: UL CA) has been studied such that carrier aggregation technology is applied to uplink communication. In the uplink carrier aggregation, user equipment (User Equipment: UE) simultaneously utilizes a plurality of component carriers (Component Carrier: CC) to transmit uplink signals to a base station (evolved NodeB: eNB).

Additionally, specifications of a new radio communication system, which is referred to as a New Radio Access Technology (NR), have recently been developed in 3GPP, as a successor of the LTE system and the LTE-Advanced system. As for the NR system, introduction of multi-Radio Access Technology (RAT) dual connectivity (MR-DC) has been studied such that, similar to the dual connectivity in the LTE system, data is divided between a base station of an LTE system and a base station of an NR system, and that data is simultaneously transmitted and received by these base stations.

### Prior Art Document

### [Non-Patent Document]

Non-Patent Document 1: 3GPP TS36.300 V12.3.0 (2014-09)
Non-Patent Document 2: 3GPP TS36.331 V12.3.0 (2014-09)
Non-Patent Document 3: 3GPP R4-148117

### SUMMARY OF THE INVENTION

### [PROBLEM TO BE SOLVED BY THE INVENTION]

There is a need for a technique to implement radio positioning during multi-RAT dual connectivity communication.

### [MEANS FOR SOLVING THE PROBLEM]

According to an aspect of the present invention, there is provided user equipment including a controller that controls radio communication with a base station; and a transmitter that reports, to the base station, interfered system information representing an interfered system that is interfered by multi-Radio Access Technology (RAT) dual connectivity.

### [ADVANTAGE OF THE INVENTION]

According to an embodiment of the present invention, radio positioning can be implemented during the multi-RAT dual connectivity communication.

### BRIEF DESCRIPTION OF DRAWINGS

FIG. 1 is a diagram illustrating interference between a receiving band of the GNSS and intermodulation distortion caused by UL CA;
FIG. 2A is a schematic diagram illustrating a radio communication system according to an embodiment of the present invention;
FIG. 2B is a block diagram illustrating a hardware configuration of user equipment according to an embodiment of the present invention;
FIG. 2C is a block diagram illustrating a hardware configuration of a base station according to an embodiment of the present invention;
FIG. 3 is a block diagram illustrating a functional configuration of the user equipment according to an embodiment of the present invention;
FIG. 4 is a block diagram illustrating a functional configuration of the base station according to an embodiment of the present invention;
FIG. 5 is a sequence diagram illustrating an uplink carrier aggregation communication process according to an embodiment of the present invention;
FIG. 6 is a diagram illustrating a signalling data structure according to an embodiment of the present invention;
FIG. 7 is a diagram illustrating a signalling data structure according to an embodiment of the present invention;
FIG. 8 is a sequence diagram illustrating an uplink carrier aggregation communication process according to another embodiment of the present invention;
FIG. 9 is a diagram illustrating a signalling data structure according to an embodiment of the present invention;
FIG. 10 is a diagram illustrating a signalling data structure according to an embodiment of the present invention;
FIG. 11 is a sequence diagram illustrating an uplink carrier aggregation communication process according to another embodiment of the present invention;
FIG. 12 is a diagram illustrating a signalling data structure according to an embodiment of the present invention;
FIG. 13 is a block diagram illustrating a functional configuration of user equipment according to another embodiment of the present invention;
FIG. 14 is a diagram illustrating a signalling data structure according to another embodiment of the present invention;
FIG. 15 is a diagram illustrating a signalling data structure according to another embodiment of the present invention;
FIG. 16 is a sequence diagram illustrating a procedure for reporting interfered system information according to an embodiment of the present invention;
FIG. 17 is a diagram illustrating a procedure in the user equipment for reporting an interfered system that is interfered by MR-DC according to an embodiment of the present invention;
FIG. 18 is a diagram illustrating a procedure for generating the interfered system information according to an embodiment of the present invention;
FIG. 19 is a diagram illustrating a signalling data structure according to another embodiment of the present invention;
FIG. 20 is a diagram illustrating a signalling data structure according to another embodiment of the present invention;
FIG. 21 is a block diagram illustrating a functional configuration of user equipment according to yet another embodiment of the present invention;
FIG. 22 is a diagram illustrating a signalling data structure according to yet another embodiment of the present invention; and
FIG. 23 is a block diagram illustrating a hardware configuration of each of the user equipment and the base station according to an embodiment of the present invention.

### [EMBODIMENTS OF THE INVENTION]

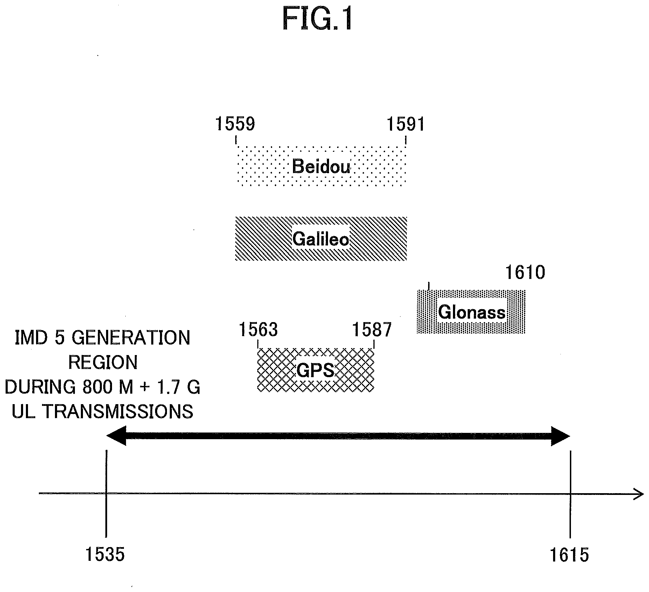

User equipment, such as a smartphone or a tablet, typically performs radio communication with the Global Navigation Satellite System (GNSS), such as the Global Positioning System (GPS), or another radio system, during communication with a base station. When user equipment simultaneously transmits radio signals on a plurality of carriers while configuring uplink carrier aggregation or multi-RAT dual connectivity, intermodulation distortion (Inter-Modulation Distortion: IMD) caused by the uplink carrier aggregation or the multi-RAT dual connectivity may be within a receiving band of another radio communication system, such as that of GNSS, depending on a combination of the carrier frequencies. For example, when a 800 MHz frequency band and a 1.7 GHz frequency band are simultaneously used during uplink carrier aggregation, it is known that fifth order intermodulation distortion (IMD5) occurs in a frequency band from 1535 MHz to 1615 MHz. As shown in FIG. 1, a generation region of IMD5 overlaps receiving bands of various types of GNSS signals, and, thus, interference occurs among devices within user equipment. As a result, during execution of uplink carrier aggregation, the user equipment is unable to receive the GNSS signals, and the user equipment becomes unable to obtain location information.

In order to solve such a problem, if, during execution of uplink carrier aggregation or multi-RAT dual connectivity, a radio positioning function is activated in user equipment, it can be considered to perform control by a base station to prevent occurrence of intermodulation. For example, when user equipment performs simultaneous transmission on a plurality of carriers, a base station may schedule a resource block with which no interference is caused with a GNSS signal, and the base station may cause the user equipment to transmit uplink data with the resource block. Additionally, even if the uplink carrier aggregation or the multi-RAT dual connectivity is configured, the base station may cause the user equipment to transmit the uplink data only on a single carrier. Alternatively, the base station may delete the configuration of the uplink carrier aggregation or the multi-RAT dual connectivity. Alternatively, the base station may cause a secondary cell (SCell) to be in an inactive state. Additionally, the base station may reduce transmission power of the user equipment, for example, by A-MPR (Additional-Maximum Power Reduction).

In order to implement such control, a base station is required to be aware of whether user equipment activates (turns on) or deactivates (turns off) the radio positioning function. However, the LTE system or the LTE-Advanced system does not consider a method for a base station to be aware of activation/deactivation of a radio positioning function in user equipment. Additionally, there is no consideration of a control for reducing the transmission power of the user equipment only during activation of the radio positioning function.

In the following, embodiments of the present invention are described based on the drawings.

In the embodiments described below, user equipment provided with a multi-RAT dual connectivity function is disclosed. To summarize the following embodiments, when the user equipment is configured with the multi-RAT dual connectivity, the user equipment determines an interfered system, such as a positioning system and a radio communication system based on a different RAT, that receives interference caused by the multi-RAT dual connectivity, and the user equipment reports, to a base station, interfered system information that represents the determined interfered system. As a result, the base station can identify, based on the received interfered system information, the interfered system that is interfered due to intermodulation distortion and/or a harmonic component caused by uplink transmission of the multi-RAT dual connectivity, and the base station can control uplink transmission by the user equipment to avoid the interference.

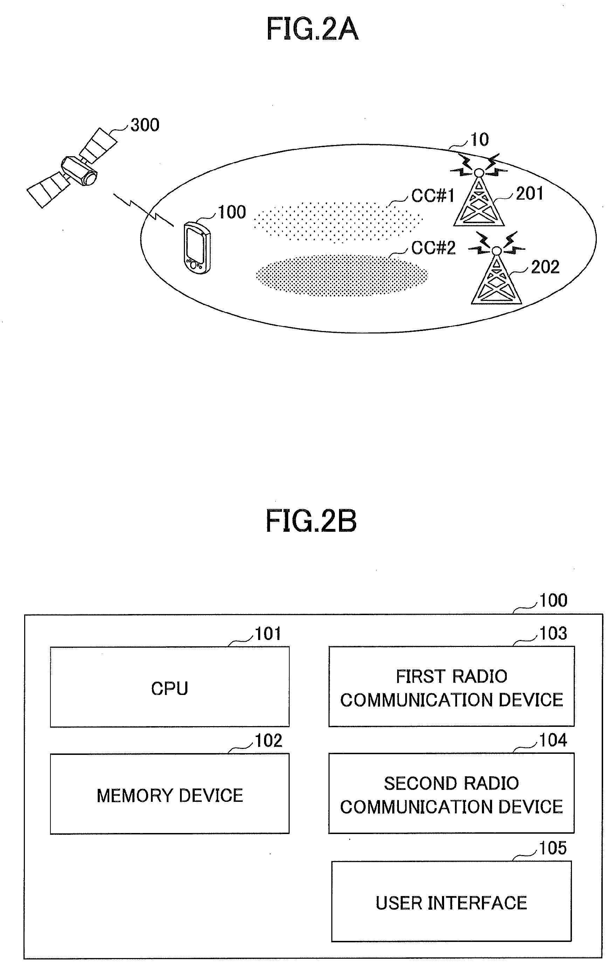

A radio communication system according to an embodiment of the present invention is described by referring to FIG. 2A. FIG. 2A is a schematic diagram illustrating the radio communication system according to the embodiment of the present invention.

As illustrated in FIG. 2A, the radio communication system 10 includes user equipment 100 and base stations 201 and 202 (which may collectively be referred to as a base station 200). The radio communication system 10 supports multi-RAT dual connectivity. As depicted, the user equipment 100 is capable of transmitting radio signals simultaneously using a plurality of component carriers CC#1 and CC#2 provided by the base stations 201 and 202 that belong to respective radio communication systems based on different RATs. The depicted embodiment only shows that the user equipment 100 performs the multi-RAT dual connectivity with the two base stations 201 and 202. However, the present invention is not limited to this. For example, the user equipment 100 may simultaneously perform uplink transmission with a plurality of base stations 200 by simultaneously using component carriers provided by three or more base stations 200 belonging to respective different RAT systems. Multiple base stations 200 are installed to cover a service area of the radio communication system 10, though, in the depicted embodiment, only the two base stations 201 and 202 are illustrated.

The user equipment 100 is provided with a multi-RAT dual connectivity function for transmitting radio signals to the base station 200 simultaneously using a plurality of carriers provided by the base stations 201 and 202 belonging to different RAT systems. Additionally, the user equipment 100 is provided with a communication function for performing radio communication with another radio communication system, such as a positioning system 300 (GNSS system).

Typically, the user equipment 100 may be, as depicted, an appropriate information processing device provided with a radio communication function, such as a smartphone, a mobile phone, a tablet, a mobile router, and a wearable terminal. As illustrated in FIG. 2B, the user equipment 100 is formed of a Central Processing Unit (CPU) 101, such as a processor; a memory device 102, such as a Random Access Memory (RAM) or a flash memory; a first radio communication device 103 for communicating radio signals with the base station 200; a second radio communication device 104 for communicating radio signals with another radio communication system, such as the positioning system 300; and a user interface 105, such as an input/output device or a peripheral device, etc. For example, each function and each process of the user equipment 100 described below may be implemented by processing or executing, by the CPU 101, data or a program stored in the memory device 102. However, the user equipment 100 is not limited to the above-described hardware configuration, and the user equipment 100 may be formed of a circuit that implements one or more processes described below.

By establishing a radio link with the user equipment 100, the base station 200 transmits, to the user equipment 100, downlink (DL) packets received from a network apparatus, such as an upper layer node or a server communicatively connected on a core network (not depicted) and/or a master base station in the multi-RAT dual connectivity, and the base station 200 transmits uplink (UL) packets received from the user equipment 100 to the network apparatus and/or the master base station in the multi-RAT dual connectivity. The base station 200 is provided with a multi-RAT dual connectivity function.

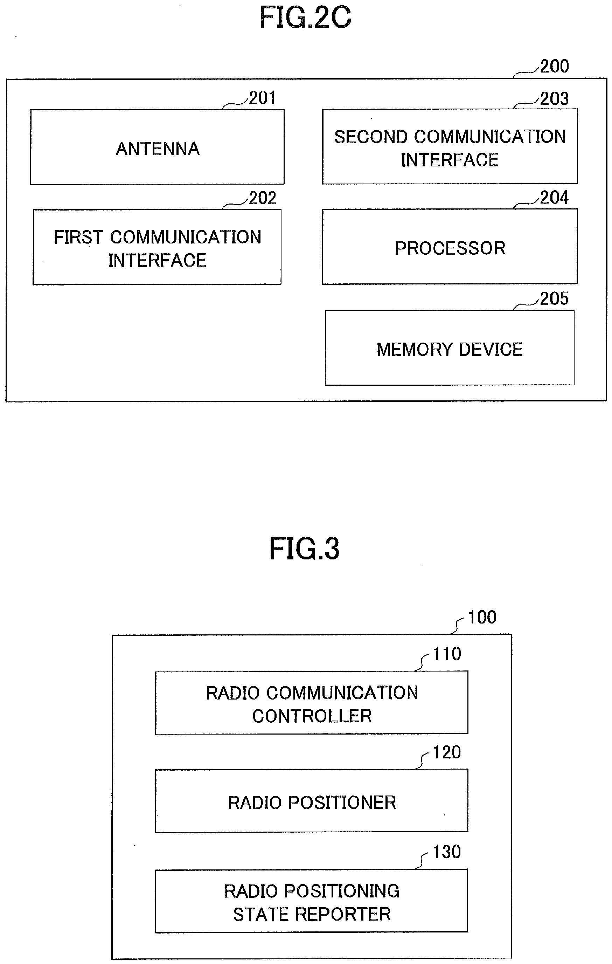

As illustrated in FIG. 2C, the base station 200 is typically formed of an antenna 201 for communicating radio signals with the user equipment 100; a first communication interface (X2 interface, etc.) 202 for communicating with an adjacent base station 200; a second communication interface (S1 interface) 203 for communicating with a core network; and a hardware resource, such as a processor 204 or a circuit, and a memory device 205 for processing signals transmitted to/received from the user equipment 100. Each function and each process of the base station 200 described below may be implemented by processing or executing data or a program stored in the memory device 205 by the processor 204. However, the base station 200 is not limited to the above-described hardware configuration, and the base station 200 may be provided with any other appropriate hardware configuration.

The positioning system 300 transmits positioning signals to the user equipment 100. The positioning system 300 is, for example, the GNSS system, such as the GPS system, the Glonass system, the Galileo system, and the Beidou system, and the positioning system 300 transmits positioning signals to the user equipment 100 on its frequency band using a plurality of satellites. As described above by referring to FIG. 1, when the combination of the 800 MHz frequency band and the 1.7 GHz frequency band is used for uplink carrier aggregation, it is known that the generation region of the intermodulation distortion caused by the combination overlaps the frequency band of the radio signals from the positioning system 300. Accordingly, during uplink transmission in the multi-RAT dual connectivity with the combination, the user equipment 100 may be unable to properly receive the positioning signals.

In the following embodiment, a receiving band for receiving radio signals from the positioning system 300 is focused on, as a frequency band that overlaps a region in which the intermodulation distortion and/or a harmonic component caused by multi-RAT dual connectivity is generated. However, the present invention is not limited to the positioning system 300. The present invention may be applied to any other radio communication system using a frequency band that is interfered by uplink transmissions from the user equipment 100 during the multi-RAT dual connectivity.

Next, the user equipment according to an embodiment of the present invention is described by referring to FIG. 3. FIG. 3 is a block diagram illustrating a functional configuration of the user equipment according to the embodiment of the present invention.

As illustrated in FIG. 3, the user equipment 100 includes a radio communication controller 110; a radio positioner 120; and a radio positioning state reporter 130.

The radio communication controller 110 controls radio communication with the base station 200. Specifically, the radio communication controller 110 communicates various types of radio channels, such as uplink/downlink control channels and uplink/downlink data channels with the base station 200, and the radio communication controller 110 executes uplink carrier aggregation and/or multi-RAT dual connectivity for transmitting radio signals to the base station 200 by simultaneously using a plurality of carriers provided by the base station 200.

The radio positioner 120 executes a radio positioning function that is based on radio signals received from the positioning system 300. The radio positioning function measures a location of the user equipment 100 based on positioning signals received from the positioning system 300. Upon detecting that the radio positioning function is activated, the radio positioner 120 receives positioning signals transmitted from the positioning system 300, and the radio positioner 120 identifies the location of the user equipment 100 based on the received positioning signals. Typically, the radio positioner 120 receives positioning signals transmitted from a plurality of satellites of the positioning system 300, and the radio positioner 120 identifies a location of the user equipment 100 from the received plurality of positioning signals, based on a known positioning algorithm. Typically, the radio positioner 120 is activated in response to an activation request from an application used by a user (e.g., an application that provides location related information, such as a map application).

When uplink carrier aggregation and/or multi-RAT dual connectivity is configured, the radio positioning state reporter 130 reports activation or deactivation of the radio positioning function to the base station 200. Specifically, in response to detecting that the radio positioner 120 activates and/or deactivates the radio positioning function while the uplink carrier aggregation and/or the multi-RAT dual connectivity is configured on the user equipment 100, the radio positioning state reporter 130 reports, to the base station 200, that the radio positioning function is activated and/or deactivated.

In an embodiment, the radio positioning state reporter 130 may be activated or deactivated in response to an indication from the base station 200. Specifically, the radio positioning state reporter 130 may report the activation and/or the deactivation of the radio positioning function to the base station 200, only if the base station 200 indicates the user equipment 100 to report activation and/or deactivation of the radio positioning function and the radio positioning state reporter 130 receives the indication to report. As a result, the base station 200 may cause the user equipment 100 to report the activation and/or the deactivation of the radio positioning function, only if the base station 200 configures a carrier on the user equipment 100 that causes interference with positioning signals from the positioning system 300 during execution of uplink carrier aggregation and/or multi-RAT dual connectivity. In other words, even if the uplink carrier aggregation and/or the multi-RAT dual connectivity is executed, if the base station 200 does not configure a carrier on the user equipment 100 that causes interference with the positioning signals, the base station 200 can avoid requesting unnecessary reporting of the activation and/or the deactivation of the positioning function. Additionally, when the base station 200 deletes the configuration of the uplink carrier aggregation and/or the multi-RAT dual connectivity on the user equipment 100, the base station 200 may cause the user equipment 100 to terminate reporting of the activation and/or the deactivation of the radio positioning function.

After receiving the report on the activation and/or the deactivation of the positioning function, the base station 200 becomes capable of controlling radio communication with the user equipment 100 to avoid interference. For example, during activation of the radio positioning function by the user equipment 100, the base station 200 may schedule, to the user equipment 100, a resource block that does not cause interference with positioning signals during uplink carrier aggregation and/or the multi-RAT dual connectivity, and the base station 200 may cause the user equipment 100 to transmit uplink data with the resource block. Additionally, even if the uplink carrier aggregation and/or the multi-RAT dual connectivity is configured, if the radio positioning function by the user equipment 100 is activated, the base station 200 may cause the user equipment 100 to transmit the uplink data using only a single carrier; the base station 200 may delete the configuration of the uplink carrier aggregation and/or the multi-RAT dual connectivity; or the base station 200 may deactivate the secondary cell (SCell).

In an embodiment, upon receiving an indication from the base station 200 to reduce transmission power for the purpose of the radio positioning function, the radio communication controller 110 may reduce the transmission power during activation of the radio positioning function to execute uplink carrier aggregation and/or multi-RAT dual connectivity with the base station 200. In order to reduce interference with positioning signals from the positioning system 300 caused by the intermodulation distortion that occurs during execution of the uplink carrier aggregation and/or the multi-RAT dual connectivity, the radio communication controller 110 may apply the reduction of the transmission power indicated by the base station 200 to an uplink communication. According to the LTE standard, the base station 200 may indicate, by an Additional Maximum Power Reduction (A-MPR) parameter, the maximum transmission power that is to be reduced by the user equipment 100 during activation of the radio positioning function while uplink carrier aggregation and/or multi-RAT dual connectivity is configured. At this time, upon detecting that the radio positioning function is activated while the uplink carrier aggregation and/or the multi-RAT dual connectivity is configured, the radio communication controller 110 reduces, during execution of the radio positioning, the maximum transmission power by an amount of power indicated by the A-MPR.

In an embodiment, the radio positioning state reporter 130 may further report, to the base station 200, a positioning system 300, a receiving center frequency for the positioning system 300, and a receiving bandwidth for the positioning system 300. Namely, upon detecting that the radio positioner 120 activates or deactivates the radio positioning function, the radio positioning state reporter 130 may report, in addition to reporting the activation or the deactivation of the radio positioning function, a type of a positioning system 300, a receiving center frequency for the positioning system 300, and a receiving bandwidth for the positioning system 300 to be utilized by the user equipment 100. As described above, the user equipment 100 is capable of using various types of positioning systems 300, such as GPS. Additionally, each positioning system 300 utilizes a specific frequency band, and each user equipment 100 typically utilizes a part of the frequency band, instead of the entire frequency band of the positioning system 300. For this reason, the radio positioning state reporter 130 may report, to the base station 200, a type, a receiving center frequency, and a receiving bandwidth of the utilized positioning system 300, in addition to activation or deactivation of the radio positioning function. As a result, the base station 200 may obtain details of the frequency band utilized by the user equipment 100 to receive positioning signals, and the base station 200 can more properly control the radio communication with the user equipment 100 to avoid interference.

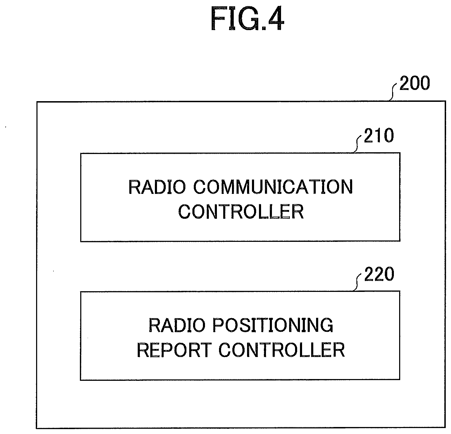

Next, by referring to FIG. 4, a base station according to an embodiment of the present invention is described. FIG. 4 is a block diagram illustrating a functional configuration of the base station according to the embodiment of the present invention.

As illustrated in FIG. 4, the base station 200 is provided with a radio communication controller 210; and a radio positioning report controller 220.

The radio communication controller 210 controls a radio communication with the user equipment 100. Specifically, the radio communication controller 210 communicates various types of control signals and data signals with the user equipment 100, and, while uplink carrier aggregation and/or multi-RAT dual connectivity is configured, the radio communication controller 210 receives radio signals from the user equipment 100 on a plurality of carriers.

The radio positioning report controller 220 controls a radio positioning report function of the user equipment 100 for reporting activation or deactivation of the radio positioning function based on radio signals received from the positioning system 300, and, when a frequency band is configured on the user equipment 100 that causes interference with radio signals from the positioning system 300 during uplink carrier aggregation and/or multi-RAT dual connectivity, the radio positioning report controller 220 causes the user equipment 100 to activate the radio positioning report function. Namely, as described above, the user equipment 100 is provided with the radio positioning report function for reporting, to the base station 200, activation and/or deactivation of the radio positioning function. Activation and deactivation of the radio positioning report function are controlled by the radio positioning report controller 220. In response to detecting that the radio positioning report controller 220 causes the user equipment 100 to activate the radio positioning report function, the user equipment 100 reports, to the base station 200, activation and/or deactivation of the radio positioning function. In response to detecting that the radio positioning report controller 220 causes the user equipment 100 to deactivate the radio positioning report function, the user equipment 100 discontinues reporting of activation and/or deactivation of the radio positioning function. When a frequency band is configured on the user equipment 100 that causes interference with positioning signals during carrier aggregation and/or multi-RAT dual connectivity, the radio positioning report controller 220 causes the user equipment 100 to activate the radio positioning report function, and, upon detecting that the radio positioning function is activated and/or deactivated while the radio positioning report function is activated, the radio positioning report controller 220 causes the user equipment 100 to report the activation and/or the deactivation of the radio positioning function.

In an embodiment, upon receiving a report on the activation of the radio positioning function from the user equipment 100, the radio communication controller 210 may control a radio communication with the user equipment 100 to avoid interference. Specifically, while the user equipment 100 activates the radio positioning function, the radio communication controller 210 may schedule, to the user equipment 100, a resource block that does not cause interference with positioning signals during uplink carrier aggregation and/or multi-RAT dual connectivity, and the radio communication controller 210 may cause the user equipment 100 to transmit uplink data with the resource block. Even if uplink carrier aggregation and/or multi-RAT dual connectivity is configured, if the user equipment 100 activates the radio positioning function, the radio communication controller 210 may cause the user equipment 100 to transmit uplink data using only a single carrier; the radio communication controller 210 may delete the configuration of the uplink carrier aggregation and/or the multi-RAT dual connectivity; or the radio communication controller 210 may deactivate the secondary cell (SCell).

In an embodiment, the radio communication controller 210 may transmit, to the user equipment 100, the transmission power to be reduced during activation of the radio positioning function. According to the LTE standard, the radio communication controller 210 may indicate, by the A-MPR parameter, the maximum transmission power that is to be reduced if the user equipment 100 transmits uplink data using a number of resource blocks that is greater than or equal to the number of the resource blocks specified by the standard, when the radio positioning function is activated while uplink carrier aggregation and/or multi-RAT dual connectivity is configured. At this time, if the user equipment 100 activates the radio positioning function while uplink carrier aggregation and/or multi-RAT dual connectivity is configured, and if the user equipment 100 transmits uplink data using a number of resource blocks that is greater than or equal to the specified number of the resource blocks, the user equipment 100 reduces the maximum transmission power by an amount of power specified by the A-MPR.

In an embodiment, when a configuration of uplink carrier aggregation and/or multi-RAT dual connectivity on the user equipment 100 is to be deleted, or when a configuration of a frequency band that causes interference is to be deleted, the radio positioning report controller 220 may cause the user equipment 100 to deactivate the radio positioning report function. Namely, when the configuration of the uplink carrier aggregation and/or the multi-RAT dual connectivity on the user equipment 100 is to be deleted, or when the configuration of the frequency band that causes the interference is to be deleted, the radio positioning report controller 220 may cause the user equipment 100 to deactivate the radio positioning report function, so as to discontinue unnecessary radio positioning reporting from the user equipment 100. In this manner, if no interference is caused by intermodulation distortion and/or a harmonic component due to carrier aggregation and/or multi-RAT dual connectivity, unnecessary radio positioning reporting from the user equipment 100 can be discontinued.

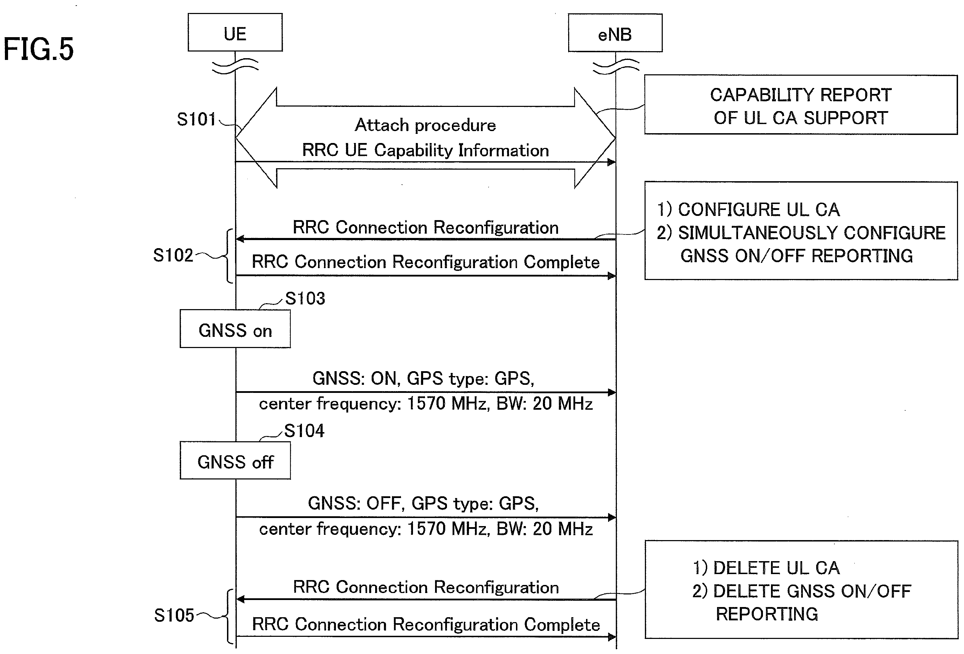

Next, by referring to FIGS. 5 through 7, an uplink carrier aggregation and/or multi-RAT dual connectivity communication process according to an embodiment of the present invention is described. FIG. 5 is a sequence diagram illustrating the uplink carrier aggregation communication process according to the embodiment of the present invention. The uplink carrier aggregation communication process is described in relation to the LTE standard. The depicted uplink carrier aggregation communication process is based on a specific release of the LTE standard. However, the present invention is not limited to the release. The present invention may be applied to any other release, such as a subsequent release, using uplink carrier aggregation and/or multi-RAT dual connectivity.

As shown in FIG. 5, at step S101, a connection process is executed between the user equipment 100 and the base station 200, and user capability information that indicates that the uplink carrier aggregation function is supported is reported to the base station 200. Note that, if the connection has already been established between the user equipment 100 and the base station 200, and the base station 200 has already received the user capability information of the user equipment 100, step S101 may be omitted.

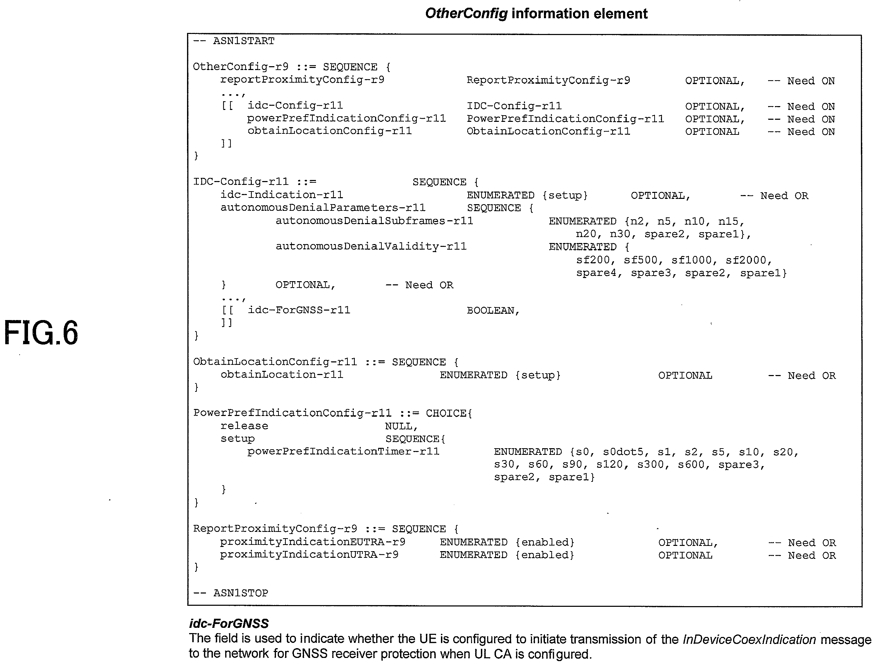

At step S102, the base station 200 configures, on the user equipment 100, a frequency band that causes interference with radio signals from the positioning system 300 during the uplink carrier aggregation, and the base station 200 causes the user equipment 100 to activate the radio positioning report function for reporting activation or deactivation of the radio positioning function, which is based on the radio signals received from the positioning system 300. Specifically, the base station 200 may configure the uplink carrier aggregation by transmitting RRC (Radio Resource Control) Connection Reconfiguration to the user equipment 100, and the base station 200 may cause the user equipment 100 to activate the radio positioning report function (idc-ForGNSS) for reporting the activation and/or the deactivation of the radio positioning function, by an information element shown in FIG. 6, which is transmitted to the user equipment 100 (idc-ForGNSS = true).

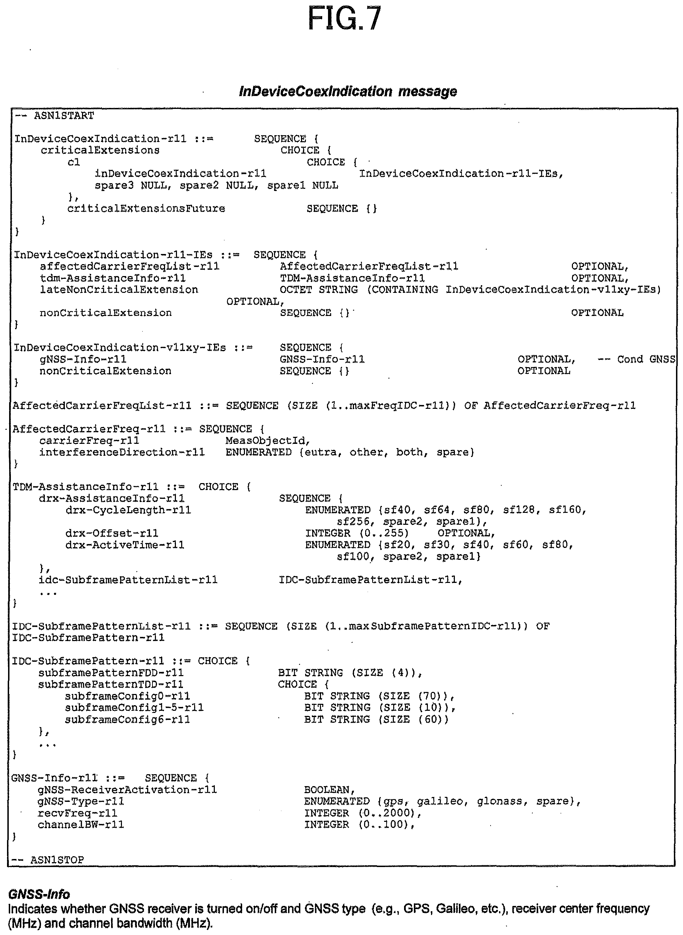

At step S103, after activating the radio positioning function (GNSS on), the user equipment 100 reports the activation of the radio positioning function to the base station 200, and the user equipment 100 executes an uplink transmission. In an embodiment, the user equipment 100 may further report, to the base station 200, a positioning system 300, a receiving center frequency for the positioning system 300, and a receiving bandwidth for the positioning system 300. For example, the user equipment 100 may report, to the base station 200, activation of the radio positioning function (gNSS-ReceiverActivation-r11=true), a type of the positioning system 300 used by the user equipment 100 (gNSS-Type-r11), a receiving center frequency (recvFreq-r11), and a receiving bandwidth (channelBW-r11), in the message "GNSS-Info-rll" shown in FIG. 7. In the specific example illustrated in FIG. 5, the user equipment 100 reports, to the base station 200, "gNSS-ReceiverActivation-r11=true," "gNSS-Type-r11=GPS," "recvFreq-r11=1570," and "channelBW-r11=20" using these parameters.

Upon receiving the report, as described above, the base station 200 controls a radio communication with the user equipment 100 to avoid interference. For example, while the user equipment 100 activates the radio positioning function, the base station 200 may schedule, to the user equipment 100, a resource block that does not cause interference with positioning signals during uplink carrier aggregation, and the base station 200 may cause the user equipment 100 to transmit uplink data with the resource block. Even if the uplink carrier aggregation is configured, if the radio positioning function is activated by the user equipment 100, the base station may cause the user equipment 100 to transmit uplink data using only a single carrier; the base station 200 may delete the configuration of the uplink carrier aggregation; or the base station 200 may deactivate the secondary cell (SCell).

At step S104, upon deactivating the radio positioning function (GNSS off), the user equipment 100 reports the deactivation of the radio positioning function to the base station 200. In an embodiment, the user equipment 100 may further report, to the base station 200, the positioning system 300, the receiving center frequency for the positioning system 300, and the receiving bandwidth for the positioning system 300.

Subsequently, at step S105, the base station 200 deletes the configuration of the uplink carrier aggregation, and the base station 200 causes the user equipment 100 to deactivate the radio positioning report function. For example, the base station 200 may cause the user equipment 100 to deactivate the radio positioning report function by configuring "idc-ForGNSS=false" in the information element illustrated in FIG. 6, which is to be transmitted to the user equipment 100.

Here, a person ordinarily skilled in the art will easily understand that the uplink carrier aggregation communication process can be similarly applied to the multi-RAT dual connectivity communication process. Namely, the uplink carrier aggregation communication process can be similarly applied to the multi-RAT dual connectivity communication process by substituting the term, uplink carrier aggregation, described above with the term, multi-RAT dual connectivity.

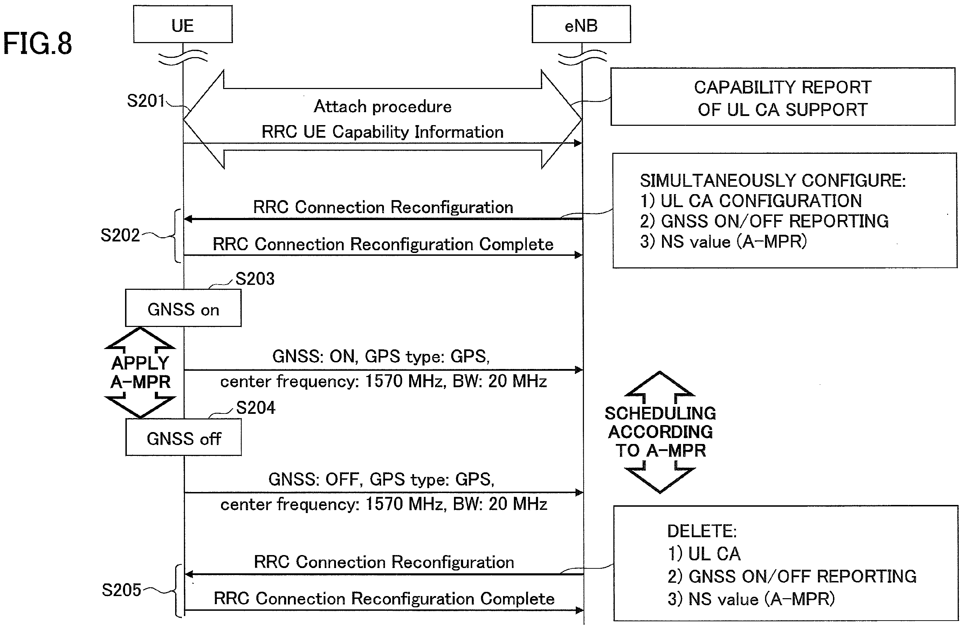

Next, by referring to FIGS. 8 through 10, the uplink carrier aggregation communication process according to another embodiment of the present invention is described. FIG. 8 is a sequence diagram illustrating the uplink carrier aggregation communication process according to another embodiment of the present invention. The uplink carrier aggregation communication process is related to an embodiment in which, if the radio positioning function is activated during the uplink carrier aggregation, and if uplink data is transmitted with a number of resource blocks that is greater than or equal to a specific number of resource blocks, the transmission power is reduced in accordance with the A-MPR, and the uplink carrier aggregation communication process is described in relation to the LTE standard. The depicted uplink carrier aggregation communication process is based on a specific release of the LTE standard. However, the present invention is not limited to the release, and the present invention may be applied to another release in which uplink carrier aggregation and/or multi-RAT dual connectivity is utilized, such as a subsequent release.

As illustrated in FIG. 8, at step S201, a connection process is executed between the user equipment 100 and the base station 200, and the user capability information indicating that the uplink carrier aggregation function is supported is reported to the base station 200. Here, if a connection has already been established between the user equipment 100 and the base station 200, and if the base station 200 has already received the user capability information of the user equipment 100, step S201 may be omitted.

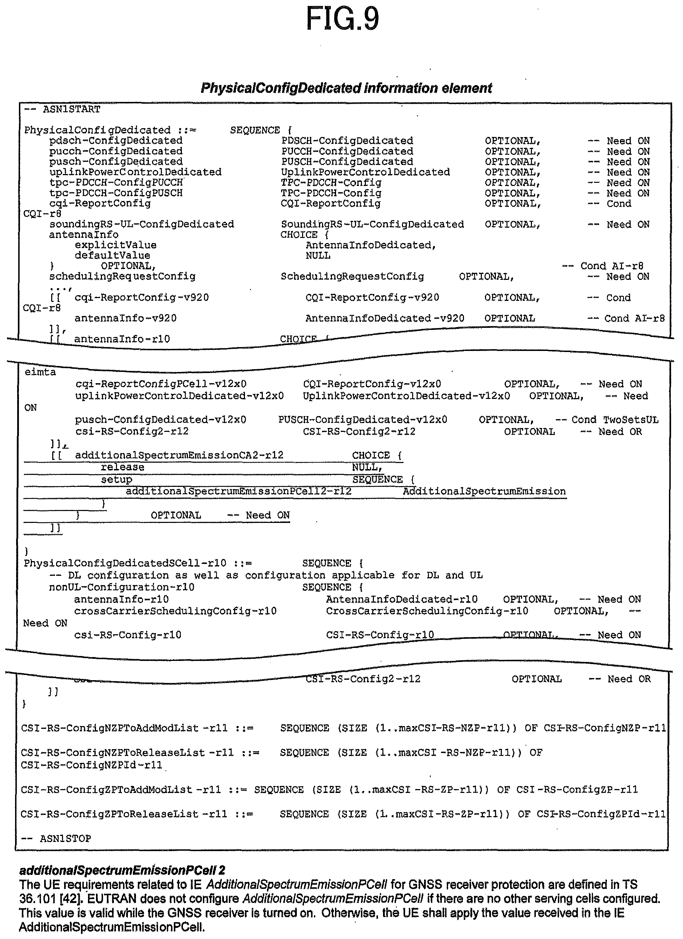

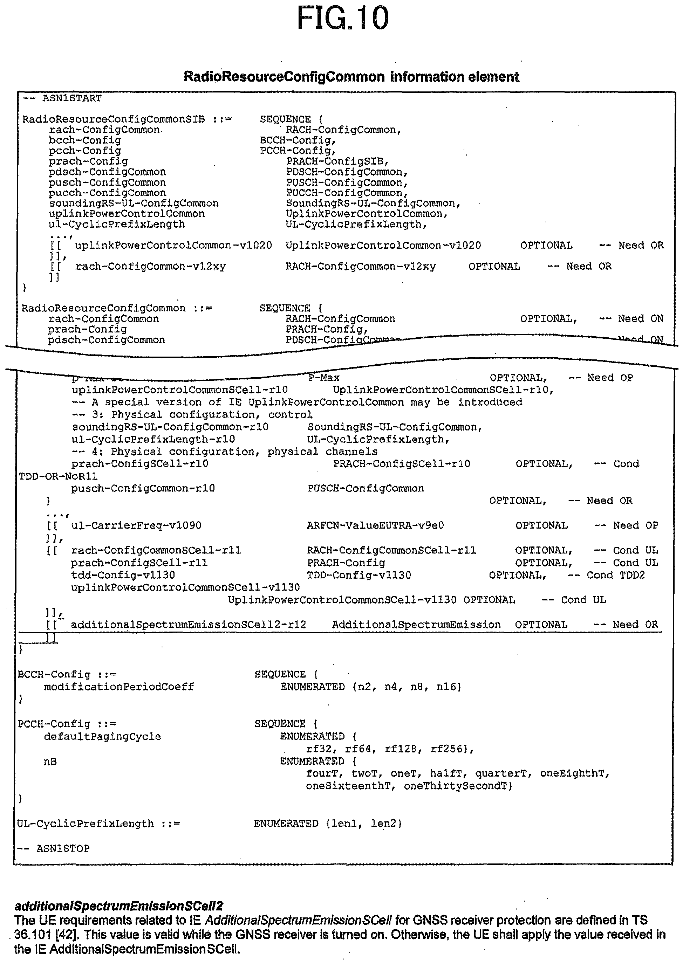

At step S202, the base station 200 configures, on the user equipment 100, a frequency band that causes interference with radio signals from the positioning system 300 during the uplink carrier aggregation, and the base station 200 causes the user equipment 100 to activate the radio positioning report function for reporting activation or deactivation of the radio positioning function, which is based on radio signals received from the positioning system 300. Specifically, the base station 200 may configure the uplink carrier aggregation by transmitting RRC Connection Reconfiguration to the user equipment 100, and the base station 200 may cause the user equipment 100 to activate the radio positioning report function (idc-ForGNSS) for reporting the activation and/or the deactivation of the radio positioning function (idc-ForGNSS = true). Additionally, the base station 200 transmits the A-MPR for causing the user equipment 100 to reduce the transmission power when the radio positioning function is activated during the uplink carrier aggregation. In an embodiment, the base station 200 may transmit the transmission power to be reduced separately to the primary cell and the secondary cell of the uplink carrier aggregation. For example, the base station 200 may transmit the A-MPR for the primary cell (PCell) of the uplink carrier aggregation by "additionalSpectrumEmissionPce112-r12" of the information element shown in FIG. 9. Additionally, the base station 200 may transmit the A-MPR for the secondary cell (SCell) of the uplink carrier aggregation by "additionalSpectrumEmissionScell2-r12" of the information element shown in FIG. 10.

At step S203, after activating the radio positioning function (GNSS on), the user equipment 100 reports the activation of the radio positioning function to the base station 200, and, if the user equipment 100 transmits uplink data with a number of resource blocks that is greater than or equal to the specific number of resource blocks, the user equipment 100 executes the uplink transmission while reducing the transmission power in accordance with the indication from the base station 200. In an embodiment, the user equipment 100 may further report, to the base station 200, the positioning system 300, the receiving center frequency for the positioning system 300, and the receiving bandwidth for the positioning system 300.

Upon receiving the report, as described above, the base station 200 controls a radio communication with the user equipment 100 to avoid interference. For example, while the user equipment 100 activates the radio positioning function, the base station 200 may schedule, to the user equipment 100, a resource block that does not cause interference with positioning signals during uplink carrier aggregation, and the base station 200 may cause the user equipment 100 to transmit uplink data with the resource block. Even if the uplink carrier aggregation is configured, if the radio positioning function is activated by the user equipment 100, the base station may cause the user equipment 100 to transmit uplink data using only a single carrier; the base station 200 may delete the configuration of the uplink carrier aggregation; or the base station 200 may deactivate the secondary cell (SCell).

At step S204, upon deactivating the radio positioning function (GNSS off), the user equipment 100 reports the deactivation of the radio positioning function to the base station 200. In an embodiment, the user equipment 100 may further report, to the base station 200, the positioning system 300, the receiving center frequency for the positioning system 300, and the receiving bandwidth for the positioning system 300.

Subsequently, at step S205, the base station 200 deletes the configuration of the uplink carrier aggregation, and the base station 200 causes the user equipment 100 to deactivate the radio positioning report function. For example, the base station 200 may cause the user equipment 100 to deactivate the radio positioning report function by configuring "idc-ForGNSS=false" in the information element illustrated in FIG. 6, which is to be transmitted to the user equipment 100. Additionally, base station 200 transmits deletion of the A-MPR, which is for causing the user equipment 100 to reduce the transmission power when the radio positioning function is activated during the uplink carrier aggregation.

In the embodiment, an uplink carrier aggregation communication process is described, which is for preventing the positioning signals from receiving interference caused by the intermodulation distortion and/or the harmonic component that is generated by the uplink carrier aggregation. However, the present invention is not limited to the interference with the positioning signals, and the present invention can be applied to another radio communication system that is interfered by the intermodulation distortion and/or the harmonic component that is generated by the uplink carrier aggregation.

Here, a person ordinarily skilled in the art will easily understand that the uplink carrier aggregation communication process can be similarly applied to the multi-RAT dual connectivity communication process. Namely, the uplink carrier aggregation communication process can be similarly applied to the multi-RAT dual connectivity communication process by substituting the term, uplink carrier aggregation, described above with the term, multi-RAT dual connectivity.

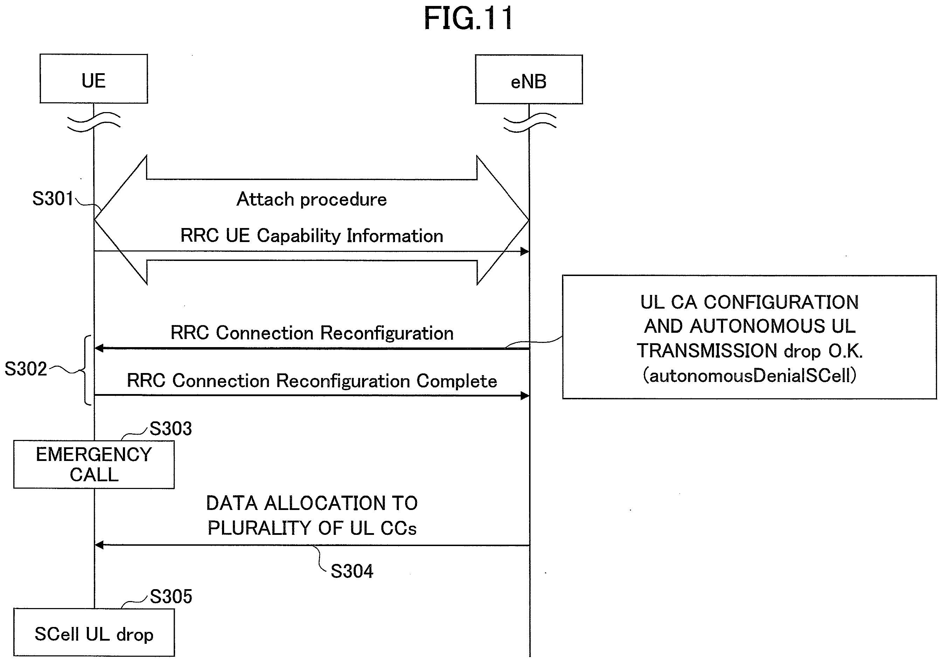

Next, by referring to FIGS. 11 through 12, the uplink carrier aggregation communication process according to another embodiment of the present invention is described. FIG. 11 is a sequence diagram illustrating the uplink carrier aggregation communication process according to another embodiment of the present invention. The uplink carrier aggregation communication process is related to an embodiment in which the base station 200 controls an autonomous operation by the user equipment 100 for ensuring activation of the radio positioning function during an emergency call, and the uplink carrier aggregation communication process is described in relation to the LTE standard. The depicted uplink carrier aggregation communication process is based on a specific release of the LTE standard. However, the present invention is not limited to the specific release, and the present invention may be applied to another release in which uplink carrier aggregation and/or multi-RAT dual connectivity is utilized, such as a subsequent release.

There is an emergency call location report function such that, when an emergency call is originated that is for reporting to an emergency response agency, such as a police or a fire department, location information related to the location at which the call is originated is automatically obtained, and the obtained location information is reported to the destination. In order to protect such an emergency call location report function, a control has been studied for the LTE standard such that the base station 200 does not allocate resources in the plurality of uplink component carriers to the user equipment 100 that originates the emergency call (3GPP R4-148117). If the base station 200 allocates resources in the plurality of uplink component carriers to the user equipment 100 executing an emergency call, the user equipment 100 is able to autonomously discontinue uplink transmission to the secondary cell. However, if the user equipment 100 autonomously discontinues uplink transmission to the secondary cell, the base station 200 may be unable to quickly identify such an autonomous operation, and the base station 200 may allocate an unnecessary uplink resource to the user equipment 100. For this reason, in the embodiment, the base station 200 is allowed to control the above-described autonomous operation by the user equipment 100.

As illustrated in FIG. 11, at step S301, a connection process is executed between the user equipment 100 and the base station 200, and user capability information that indicates that the uplink carrier aggregation function is supported is reported to the base station 200. In the embodiment, the radio communication controller 110 of the user equipment 100 is provided with an autonomous transmission stop function for discontinuing uplink transmission to the secondary cell during an emergency call if uplink resources are allocated in a plurality of component carriers, and the radio communication controller 110 is capable of activating the autonomous transmission stop function by activation permission from the base station 200. Here, if a connection has already been established between the user equipment 100 and the base station 200, and if the base station 200 has already received the user capability information of the user equipment 100, step S201 may be omitted.

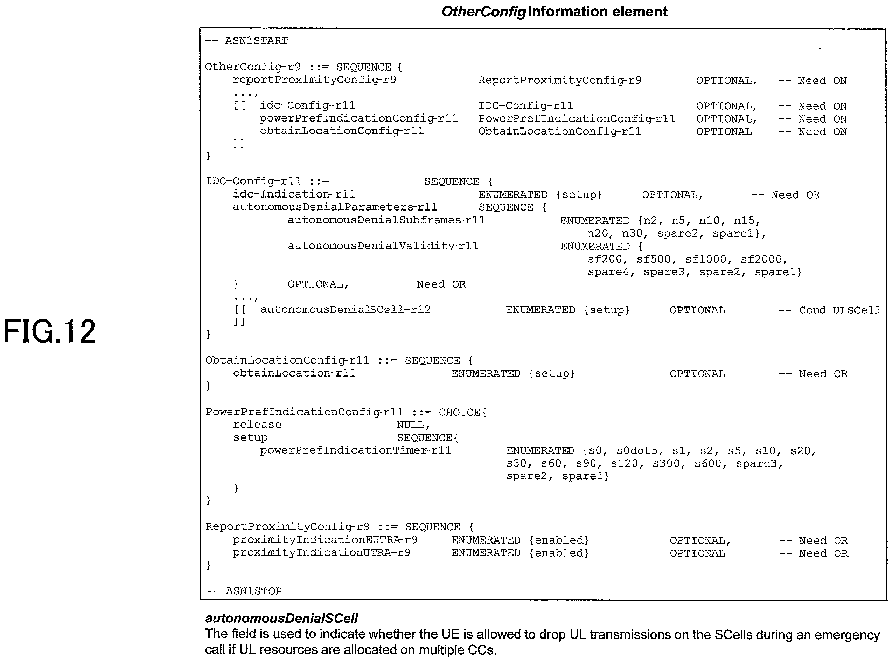

At step S302, the base station 200 configures, on the user equipment 100, a frequency band that causes interference with radio signals from the positioning system 300 during the uplink carrier aggregation, and the base station 200 causes the user equipment 100 to activate the radio positioning report function for reporting activation or deactivation of the radio positioning function, which is based on the radio signals received from the positioning system 300. Furthermore, when uplink resources are allocated in a plurality of component carriers, the base station 200 allows, using the radio positioning report controller 220, activation of the autonomous transmission stop function for discontinuing uplink transmission to the secondary cell during an emergency call by the user equipment 100. Specifically, the base station 200 configures uplink carrier aggregation by transmitting the RRC Connection Reconfiguration to the user equipment 100, and, as illustrated in FIG. 12, the base station 200 transmits, to the user equipment 100, an indication to activate the radio positioning function for reporting activation and/or deactivation of the radio positioning function (idc-ForGNSS=true) and permission to activate the autonomous transmission stop function (autonomousDenialSCell=setup).

At step S303, the user equipment 100 originates an emergency call to an emergency response agency, such as a police or a fire department.

At step S304, the base station 200 allocates resources in a plurality of uplink component carriers to the user equipment 100.

At step S305, the user equipment 100 activates the autonomous transmission stop function in accordance with the permission to activate the autonomous transmission stop function (autonomousDenialScell=setup), which is transmitted from the base station 200 at step S302, and the user equipment 100 discontinues uplink transmission to the secondary cell, which is allocated at step S303.

According to the above-described embodiment, the base station 200 is allowed to control activation of the autonomous transmission stop function by the user equipment 100 executing an emergency call; the base station 200 can ascertain an expected operation by the user equipment 100; and the base station 200 can be prevented from allocating unnecessary uplink resources to the user equipment 100 that originates the emergency call.

Here, a person ordinarily skilled in the art will easily understand that the uplink carrier aggregation communication process can be similarly applied to the multi-RAT dual connectivity communication process. Namely, the uplink carrier aggregation communication process can be similarly applied to the multi-RAT dual connectivity communication process by substituting the term, uplink carrier aggregation, described above with the term, multi-RAT dual connectivity.

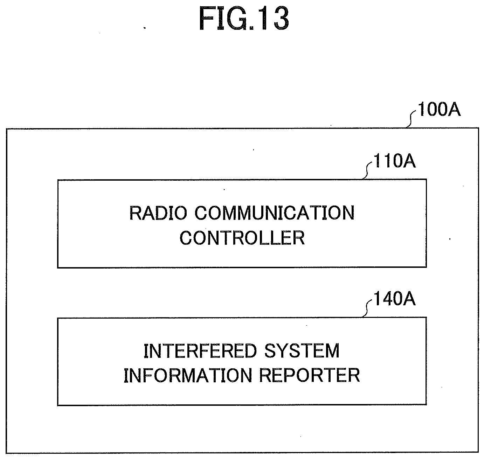

Next, by referring to FIGS. 13 to 20, the user equipment according to another embodiment of the present invention is described. In the above-described embodiment, as a frequency band that overlaps with the generation region of the intermodulation distortion and/or the harmonic component caused by the uplink carrier aggregation and/or the multi-RAT dual connectivity, the receiving band of the radio signals from the positioning system 300 is focused on. However, the present invention is not limited to the positioning system 300, and the present invention may be applied to any other radio communication system using a frequency band that is interfered by the uplink transmission from the user equipment 100. For example, as an interfered system 400 (not depicted) that receives such interference, there is a radio communication system that utilizes an unlicensed band (unlicensed band), such as 2.4 GHz or 5 GHz (e.g., Wi-Fi or Bluetooth (registered trademark)). In the embodiment, there is focus on the interfered system 400, which is interfered by the uplink carrier aggregation and/or the multi-RAT dual connectivity.

FIG. 13 is a block diagram illustrating a functional configuration of user equipment according to another embodiment of the present invention. As illustrated in FIG. 13, the user equipment 100A is provided with a radio communication controller 110A and an interfered system information reporter 140A.

The radio communication controller 110A controls a radio communication with the base station 200. Specifically, similar to the radio communication controller 110, the radio communication controller 110A communicates various types of radio channels, such as uplink/downlink control channels and uplink/downlink data channels, with the base station 200, and the radio communication controller 110A executes uplink carrier aggregation and/or the multi-RAT dual connectivity for transmitting radio signals to the base station 200 simultaneously using a plurality of carriers provided by the base station 200.

The interfered system information reporter 140A reports, to the base station 200, interfered system information of the interfered system 400 that is interfered by the uplink carrier aggregation and/or the multi-RAT dual connectivity. For example, the user equipment 100A is capable of performing radio communication with, in addition to the base station 200, the interfered system 400, such as Wi-Fi or Bluetooth (registered trademark), that utilizes an unlicensed band that is interfered by the uplink carrier aggregation and/or the multi-RAT dual connectivity. In response to detecting that a radio communication with the interfered system 400 is started or stopped while the uplink carrier aggregation and/or the multi-RAT dual connectivity is configured, the interfered system information reporter 140A reports the start or stop of the radio communication to the base station 200.

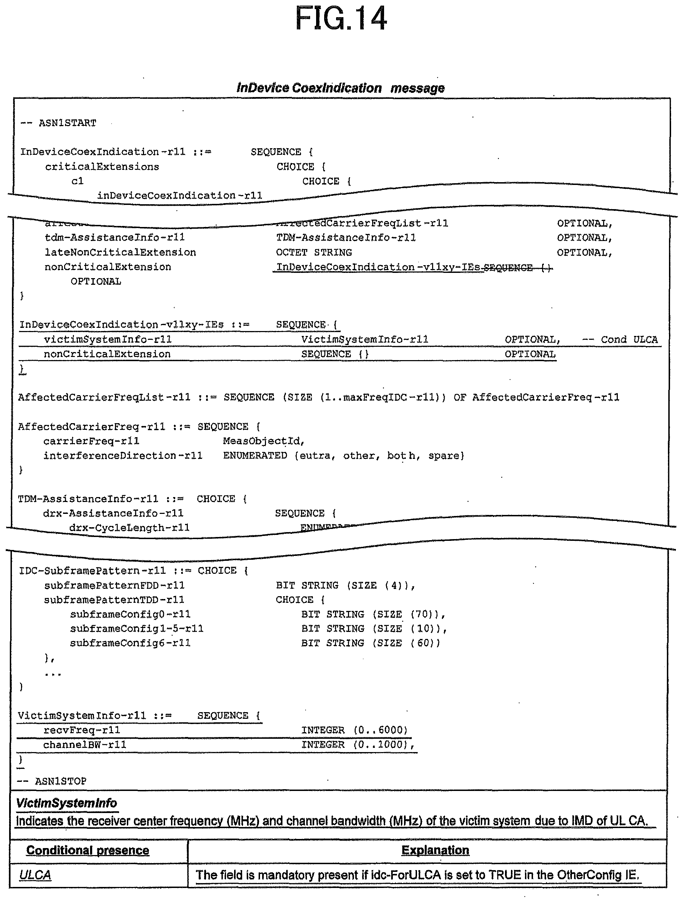

In an embodiment, the interfered system information may include the center frequency and the receiving bandwidth of the interfered system 400. The user equipment 100A can use various types of interfered systems 400, such as Wi-Fi or Bluetooth (registered trademark), and the interfered system information reporter 140A reports, to the base station 200, the center frequency and the receiving bandwidth of the interfered system 400. Upon receiving the center frequency and the receiving bandwidth of the interfered system 400 from the user equipment 100A, the base station 200 can obtain details of a frequency band (e.g., unlicensed band) that is utilized for the radio communication between the user equipment 100A and the interfered system 400, and the base station 200 can more properly control the radio communication with the user equipment 100A to avoid interference. For example, the interfered system information reporter 140A may report, to the base station 200, system information "VictimSystemInfo" representing the center frequency "recvFreq" and the receiving bandwidth "channelBW" of the interfered system 400 by the signalling data structure, such as that illustrated in FIG. 14. Note that, when there are a plurality of interfered systems 400, the interfered system information reporter 140A may report, to the base station 200, interfered system information items of the respective plurality of interfered systems 400.

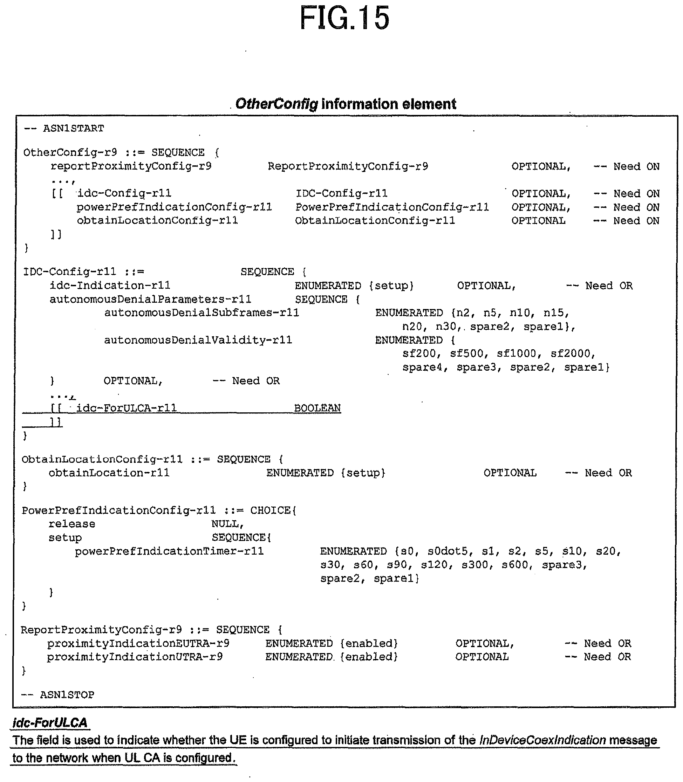

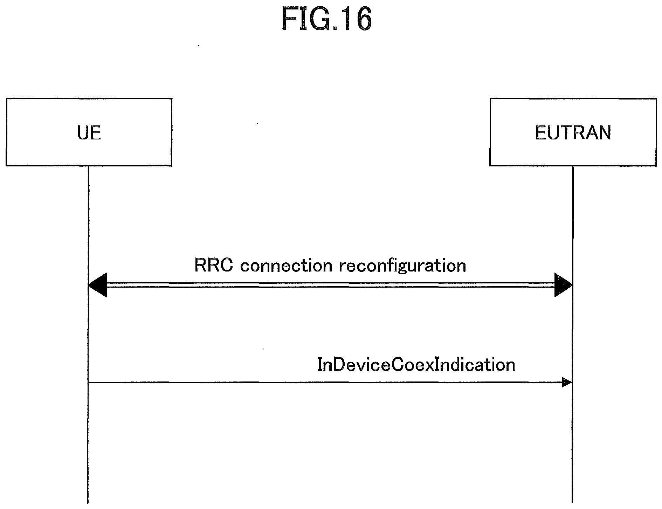

In an embodiment, the interfered system information reporter 140A may be activated or deactivated by an indication from the base station 200. Specifically, the interfered system information reporter 140A may report, to the base station 200, start or stop of the radio communication with the interfered system 400, only if the base station 200 indicates the user equipment 100A to report the start and/or the stop of the radio communication with the interfered system 400 and the indication to report is received. As a result, the base station 200 is allowed to cause the user equipment 100A to report start and/or stop of the radio communication with the interfered system 400, only if the base station 200 configures, on the user equipment 100A, a carrier that causes interference with the radio communication with the interfered system 400 during execution of the uplink carrier aggregation and/or the multi-RAT dual connectivity. In other words, even if the uplink carrier aggregation and/or the multi-RAT dual connectivity is executed, if no carrier is configured, on the user equipment 100A, that causes interference with the interfered system 400, the base station 200 can avoid causing unnecessary reporting of the start and/or the stop of the radio communication with the interfered system 400. For example, when the uplink carrier aggregation is configured, the base station 200 may indicate, by the signalling data structure illustrated in FIG. 15, the user equipment 100A to transmit, to the base station 200, an in-device coexistence notification "InDeviceCoexIndication" including interfered system information "VictimSystemInfo" of the interfered system 400. If, in the depicted signalling data structure, "idc-ForUL CA" is configured to be "TRUE," in response to detecting that the uplink carrier aggregation and/or the multi-RAT dual connectivity is configured, the interfered system information reporter 140A may transmit, to the base station 200, the in-device coexistence notification "InDeviceCoexIndication" including the interfered system information "VictimSystemInfo" of the interfered system 400. For example, during the multi-RAT dual connectivity, in response to a reconfiguration indication "RRC connection reconfiguration" from the base station 200 (in the depicted example, an LTE base station, but may be an NR base station), as illustrated in FIG. 16, the interfered system information reporter 140A may transmit the in-device coexistence notification "InDeviceCoexIndication" to the base station 200. Additionally, when the base station 200 deletes the configuration of the uplink carrier aggregation and/or the multi-RAT dual connectivity on the user equipment 100A, the base station 200 may cause the user equipment 100A to terminate reporting of the start and/or the stop of the radio communication with the interfered system 400.

Upon receiving the report on the start and/or the stop of the radio communication with the interfered system 400, the base station 200 becomes capable of controlling the radio communication with the user equipment 100A to avoid interference. For example, when the radio communication with the interfered system 400 by the user equipment 100A is activated, the base station 200 may schedule, to the user equipment 100A, a resource block that does not cause interference with the interfered system 400 during the uplink carrier aggregation and/or the multi-RAT dual connectivity, and the base station 200 may cause the user equipment 100A to transmit uplink data with the resource block. Furthermore, even if the uplink carrier aggregation and/or the multi-RAT dual connectivity is configured, if the radio communication with the interfered system 400 by the user equipment 100A is activated, the base station 200 may cause the user equipment 100A to transmit the uplink data using only a single carrier; the base station 200 may delete the configuration of the uplink carrier aggregation and/or the multi-RAT dual connectivity; or the base station 200 may deactivate the secondary cell (SCell).

In an embodiment, upon receiving an indication from the base station 200 to reduce the transmission power for the radio communication with the interfered system 400, the radio communication controller 110A may reduce the transmission power during activation of the radio communication with the interfered system 400, and the radio communication controller 110A may execute the uplink carrier aggregation communication and/or the multi-RAT dual connectivity communication with the base station 200. In order to reduce the interference with the interfered system 400 that is caused by the intermodulation distortion that occurs during execution of the uplink carrier aggregation and/or the multi-RAT dual connectivity, the radio communication controller 110A may apply the reduction of the transmission power indicated by the base station 200 to the uplink transmission. According to the LTE standard, the base station 200 may indicate, by the A-MPR parameter, the maximum transmission power to be reduced by the user equipment 100A during activation of the radio communication with the interfered system 400 while the uplink carrier aggregation and/or the multi-RAT dual connectivity is configured. At this time, if the radio communication with the interfered system 400 is activated while the uplink carrier aggregation and/or the multi-RAT dual connectivity is configured, the radio communication controller 110A reduces the maximum transmission power by an amount of power indicated by the A-MPR during execution of the radio communication.

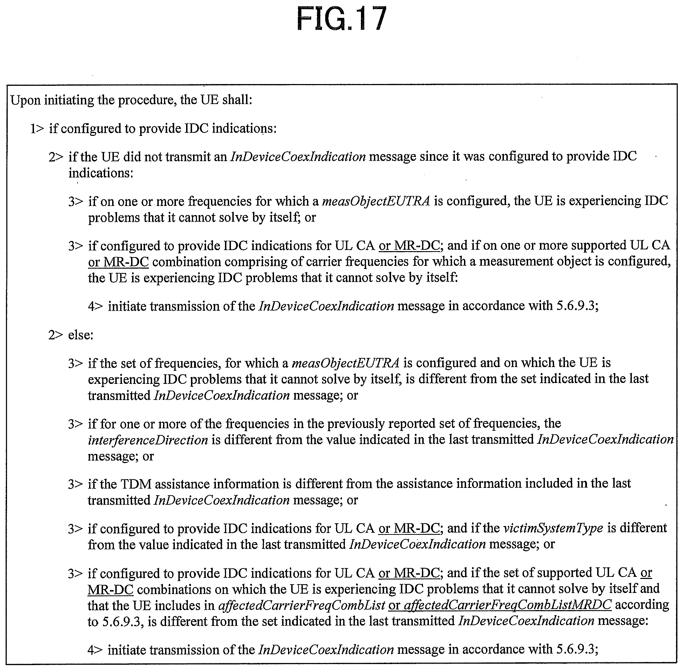

FIG. 17 is a diagram showing a procedure in user equipment for reporting an interfered system that is interfered by MR-DC according to an embodiment of the present invention. As shown in FIG. 17, when the user equipment 100, on which the multi-RAT dual connectivity is configured, receives configuration information for reporting interfered system information to the base station 200, the interfered system information reporter 140A determines presence or absence of a carrier frequency of an interfered system 400 that is interfered by the multi-RAT dual connectivity. Upon detecting a carrier frequency of an interfered system 400 that is interfered by the multi-RAT dual connectivity, the interfered system information reporter 140A generates an in-device coexistence notification "InDeviceCoexIndiction" including the interfered system information representing the detected interfered system 400, and the interfered system information reporter 140A transmits the generated in-device coexistence notification to the base station 200.

Here, when the interfered system information is updated, the interfered system information reporter 140A may generate an in-device coexistence notification "InDeviceCoexIndication" including the updated interfered system information, and the interfered system information reporter 140A may transmit the generated in-device coexistence notification to the base station 200.

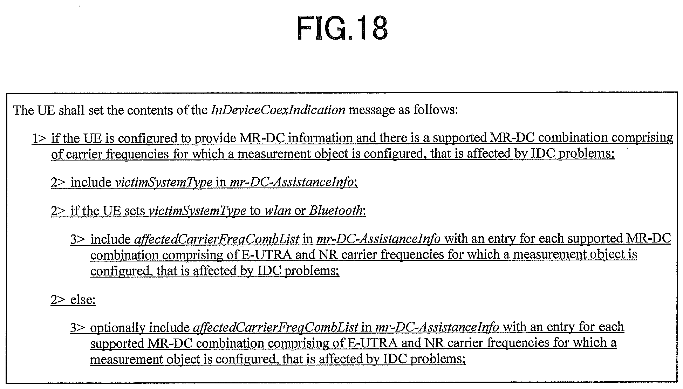

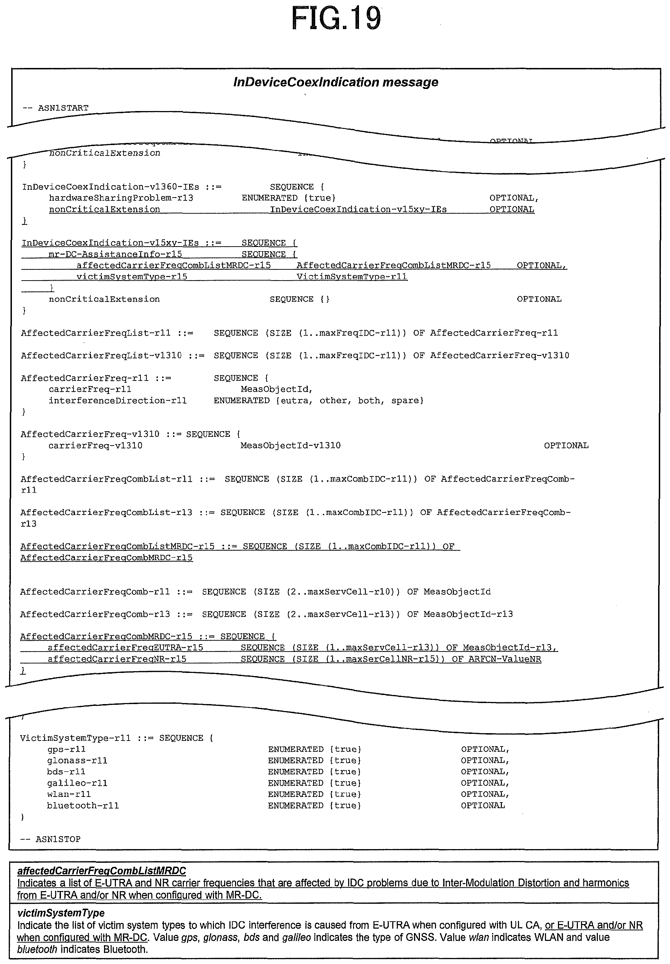

In an embodiment, the interfered system information may represent a type of the interfered system 400 that is interfered by the multi-RAT dual connectivity. Additionally, the interfered system information may represent the carrier frequency of the interfered system 400 that is interfered by the multi-RAT dual connectivity. Specifically, as illustrated in FIG. 18, the interfered system information reporter 140A may include the type (WLAN, Bluetooth, etc.) of the interfered system 400 as "victimSystemType" and the carrier frequency of the interfered system 400 as "affectedCarrierFreqCombList" in the interfered system information. The interfered system information reporter 140A may report, to the base station 200, the generated interfered system information in the in-device coexistence notification "InDeviceCoexIndication" by the signalling structure illustrated in FIG. 19. For example, as the type of the interfered system 400, "gps," "glonass," "bds," "galileo," "wlan," "bluetooth," etc., may be configured in the "victimSystemType" without limitation. Additionally, "affectedCarrierFreqCombList" may represent a list of carrier frequencies affected by the IDC problem caused by the intermodulation distortion and/or the harmonic component during the multi-RAT dual connectivity.

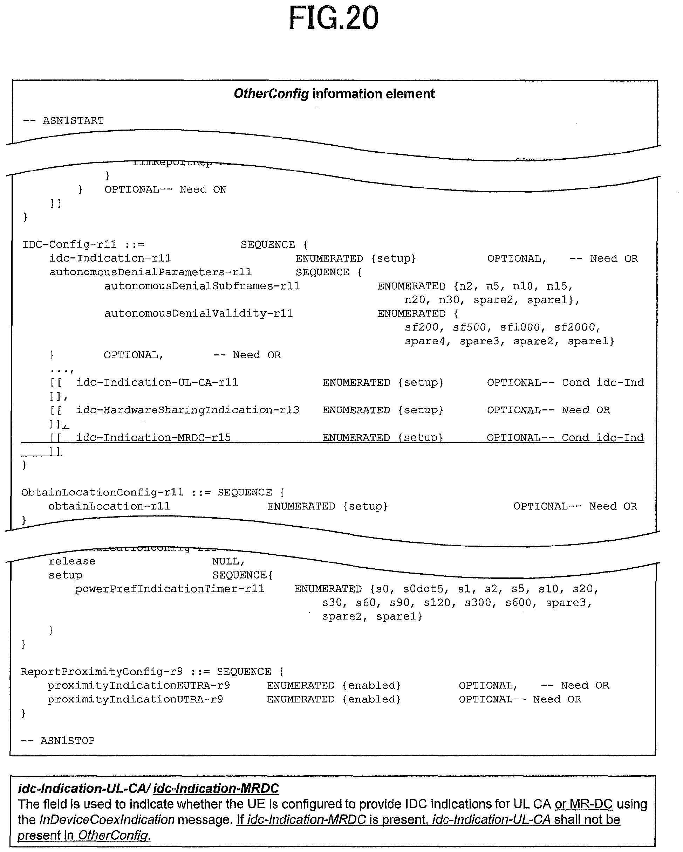

In an embodiment, upon receiving configuration information for reporting the interfered system information, the interfered system information reporter 140A may report the interfered system information to the base station 200. For example, as shown in FIG. 20, the base station 200 may configure the user equipment 100 to report the interfered system information representing the interfered system 400 that is interfered by the multi-RAT dual connectivity, by configuring "idc-Indication-MRDC" in the configuration information "OtherConfig." Upon receiving the configuration information, the interfered system information reporter 140A may report the interfered system information representing the interfered system 400 that is interfered by the multi-RAT dual connectivity.

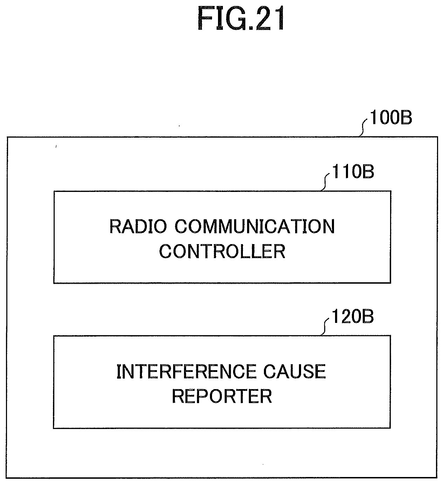

Next, by referring to FIGS. 21 through 22, user equipment according to yet another embodiment of the present invention is described. In the above-described embodiment, in order to avoid uplink interference, the system information of one or more interfered systems 400 that are interfered by the uplink carrier aggregation and/or the multi-RAT dual connectivity is reported to the base station 200. Here, the uplink interference is not limited to the intermodulation distortion (Inter-Modulation Distortion: IMD) caused by the above-described uplink carrier aggregation and/or the multi-RAT dual connectivity, and the uplink interference may be generated by another cause, such as a harmonic component of a single carrier uplink transmission. Accordingly, by reporting the cause of the interference to the base station 200, the base station 200 can properly handle the uplink interference.

FIG. 21 is a block diagram illustrating a functional configuration of the user equipment according to yet another embodiment of the present invention. As illustrated in FIG. 21, the user equipment 100B is provided with a radio communication controller 110B and an interference cause reporter 120B.

The radio communication controller 110B controls a radio communication with the base station 200. Specifically, similar to the radio communication controllers 110 and 110A, the radio communication controller 110B communicates various types of radio channels with the base station 200, such as uplink/downlink control channels or uplink/downlink data channels, and the radio communication controller 110B executes uplink carrier aggregation and/or multi-RAT dual connectivity for transmitting radio signals to the base station 200 simultaneously using a plurality of carriers provided by the base station 200. The radio communication controller 110B also supports an uplink transmission based on a single carrier scheme. It is known that, in the single carrier uplink transmission, a harmonic component causes interference.

The interference cause reporter 120B reports a cause of uplink interference to the base station 200. In an embodiment, the cause of the uplink interference may be intermodulation distortion generated by uplink carrier aggregation and/or multi-RAT dual connectivity, or a harmonic component of a single carrier uplink transmission. For example, if the cause of the uplink interference is the intermodulation distortion generated by the uplink carrier aggregation and/or the multi-RAT dual connectivity, the interference cause reporter 120B reports, to the base station 200, that the cause of the interference is the intermodulation distortion (IMD) generated by the uplink carrier aggregation. If the cause of the uplink interference is a harmonic component of a single carrier uplink transmission, the interference cause reporter 120B reports, to the base station 200, that the harmonic component of the single carrier uplink transmission is the cause of the interference.

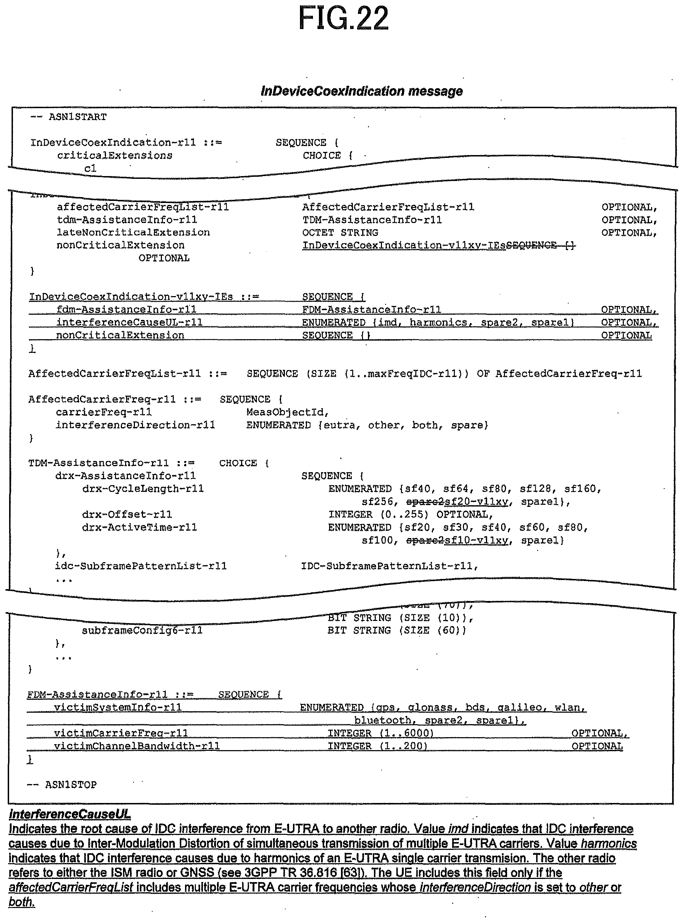

Specifically, as illustrated in FIG. 22, the interference cause reporter 120B may report the cause of the interference in the information element "interferenceCauseUL" of the in-device coexistence notification "InDeviceCoexIndication." For example, if the cause of the interference is the intermodulation distortion generated by the uplink carrier aggregation, the interference cause reporter 120B may set the value of "interferenceCause" to "imd," and the interference cause reporter 120B may report "InDeviceCoexIndication" to the base station 200. If the cause of the interference is the harmonic component of the single carrier uplink transmission, the interference cause reporter 120B may set the value of "interferenceCauseUL" to "harmonics," and the interference cause reporter 120B may report "InDeviceCoexIndication" to the base station 200. Note that the cause of the uplink interference is not limited to these, and any other cause may be reported to the base station 200.

### (Conclusion of the embodiments)

As described above, by the embodiments, there is provided user equipment including a controller that controls a radio communication with a base station; and a transmitter that reports, to the base station, interfered system information representing an interfered system that is interfered by multi-Radio Access Technology (RAT) dual connectivity. According to this user equipment, radio positioning can be executed while the multi-RAT dual connectivity communication is performed.

The interfered system information may represent a type of the interfered system that is interfered by the multi-RAT dual connectivity. According to this configuration, the base station can select a resource for controlling the interference, based on the type of the interfered system.

The interfered system information may represent a carrier frequency of the interfered system that is interfered by the multi-RAT dual connectivity. According to this configuration, the base station can select a frequency resource for controlling the interference, based on the carrier frequency of the interfered system.

In response to receiving, by the user equipment, configuration information for reporting the interfered system information, the transmitter may report the interfered system information to the base station. According to this configuration, the user equipment reports the interfered system information to the base station only if a carrier is configured that causes interference with positioning signals from a positioning system during execution of the multi-RAT dual connectivity, so that unnecessary reporting can be avoided.

Furthermore, according to the embodiment, there is provided an interference coordination method including: controlling, by user equipment, a radio communication with a base station; and reporting, by the user equipment, interfered system information representing an interfered system that is interfered by multi-Radio Access Technology (RAT) dual connectivity to the base station. According to this configuration, the base station can select a resource for controlling the interference, based on a type of the interfered system.

### (Supplemental embodiments)

The block diagrams used for the descriptions of the above-described embodiment represent blocks on a function-by-function basis. These functional blocks (components) are implemented by any combination of at least one of hardware and software. Here, a means for implementing each functional block is not particularly limited. Namely, each functional block may be implemented by one device that is physically and/or logically combined, or may be implemented by a plurality of devices that is obtained by directly and/or indirectly (e.g., using wired, wireless, etc.) connecting two or more devices that are physically and/or logically separated.

The functions include judging, deciding, determining, computing, calculating, processing, deriving, examining, searching, ascertaining, receiving, transmitting, outputting, accessing, solving, selecting, choosing, establishing, comparing, assuming, expecting, deeming, broadcasting, notifying, communicating, forwarding, configuring, reconfiguring, allocating, mapping, assigning, etc., however, the functions are not limited to these. For example, the functional block (component) for transmitting is called a transmitting unit or a transmitter. For all of these, as described above, the implementation method is not particularly limited.

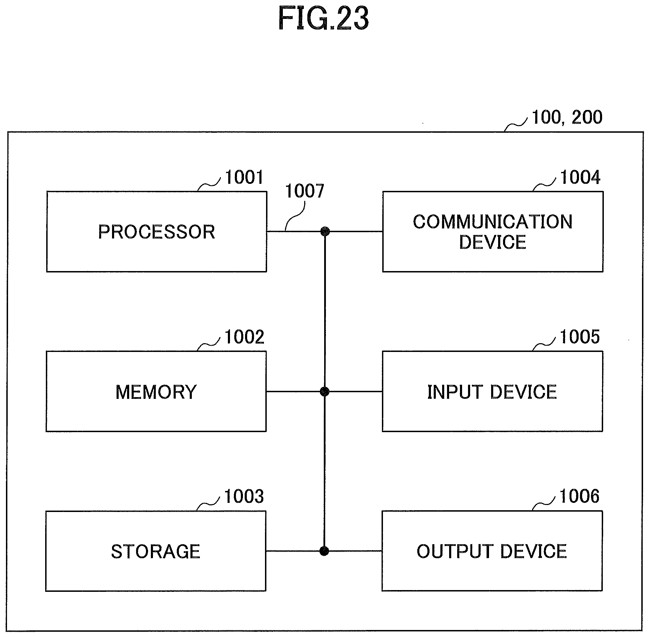

For example, the user equipment 100 and the base station 200 according to the embodiment of the present invention may function as computers for executing a process of the radio communication method of the present invention. FIG. 23 is a block diagram illustrating a hardware configuration of each of the user equipment 100 and the base station 200 according to the embodiment of the present invention. Each of the above-described user equipment 100 and base station 200 may be physically configured as a computer device including a processor 1001, a memory 1002, a storage 1003, a communication device 1004, an input device 1005, an output device 1006, a bus 1007, etc.

Note that, in the following description, the term "apparatus" can be replaced with a circuit, a device, a unit, etc. The hardware configuration of each of the user equipment 100 and the base station 200 may be configured to include one or more of the respective devices illustrated, or may be configured not to include a part of the devices.

Each function of the user equipment 100 and the base station 200 is implemented by loading predetermined software (program) on hardware, such as the processor 1001 and the memory 1002, so that the processor 1001 performs computation and controls communication by the communication device 1004, and at least one of reading and writing of data in the memory 1002 and the storage 1003.

The processor 1001, for example, operates an operating system to control the entire computer. The processor 1001 may be configured with a central processing unit (CPU: Central Processing Unit) including an interface with a peripheral device, a control device, a processing device, a register, etc. For example, each of the above-described components may be implemented by the processor 1001.

Additionally, the processor 1001 reads a program (program code), a software module and data from at least one of the storage 1003 and the communication device 1004 to the memory 1002, and executes various processes according to these. As the program, a program is used which causes a computer to execute at least a part of the operations described in the above-described embodiment. For example, a process by each component of each of the user equipment 100 and the base station 200 may be implemented by a control program stored in the memory 1002 and executed by the processor 1001, and another functional block may be similarly implemented. Although it is described that the above-described various processes are executed by a single processor 1001, the above-described various processes may be simultaneously or sequentially executed by two or more processors 1001. The processor 1001 may be implemented with one or more chips. Note that the program may be transmitted from a network via an electric communication line.

The memory 1002 is a computer readable recording medium, and the memory 1002 may be formed of at least one of a read-only memory (ROM), an erasable programmable ROM (EPROM), an electrically erasable programmable ROM (EEPROM), a random access memory (RAM), etc. The memory 1002 may be referred to as a register, a cache, a main memory (main storage device), etc. The memory 1002 can store executable programs (program codes), software modules, etc., that can be executed to implement the radio communication method according to the embodiment of the present invention.

The storage 1003 is a computer readable recording medium, and, for example, the storage 1003 may be formed of at least one of an optical disk such as a Compact Disc ROM (CD-ROM), a hard disk drive, a flexible disk, a magneto-optical disk (for example, a compact disk, a digital versatile disk, a Blu-ray (registered trademark) disk), a smart card, a flash memory (for example, a card, a stick, a key drive), a floppy (registered trademark) disk, a magnetic strip, etc. The storage 1003 may be referred to as an auxiliary storage device. The above-described storage medium may be, for example, a database including at least one of the memory 1002 and the storage 1003, a server, or any other suitable medium.

The communication device 1004 is hardware (transmission/reception device) for performing communication between computers via at least one of wired and wireless networks, and, for example, the communication device 1004 is also referred to as a network device, a network controller, a network card, a communication module, etc. For example, each of the above-described component may be implemented by the communication device 1004.

The input device 1005 is an input device (e.g., a keyboard, a mouse, a microphone, a switch, a button, a sensor, etc.) for receiving an input from outside. The output device 1006 is an output device (e.g., display, speaker, LED lamp, etc.) that performs output toward outside. Note that the input device 1005 and the output device 1006 may be integrated (for example, a touch panel).

Furthermore, the devices, such as the processor 1001 and the memory 1002, are connected by a bus 1007 for communicating information. The bus 1007 may be formed of a single bus, or the bus 1007 may be formed of buses that are different among the devices.

Furthermore, each of the user equipment 100 and the base station 200 may be configured to include hardware, such as a microprocessor, a digital signal processor (DSP: Digital Signal Processor), an ASIC (Application Specific Integrated Circuit), a PLD (Programmable Logic Device), an FPGA (Field Programmable Gate Array), etc., and a part or all of the functional blocks may be implemented by the hardware. For example, the processor 101 may be implemented with at least one of these hardware components.

Notification of information is not limited to the aspect/embodiment described in the present specification and may be performed by other methods. For example, notification of information may be performed via physical layer signaling (for example, Downlink Control Information (DCI) or Uplink Control Information (UCI)), higher-layer signaling (for example, RRC signaling, Medium Access Control (MAC) signaling, broadcast information (Master Information Block (MIB), or System Information Block (SIB)), other signals, or by a combination thereof. Moreover, an RRC message may be referred to as the RRC signaling. Furthermore, the RRC message may be an RRC connection setup (RRC Connection Setup) message, an RRC connection reconfiguration (RRC Connection Reconfiguration) message, or the like, for example.

Each aspect/embodiment described in this specification can be applied to long term evolution (LTE), LTE-advanced (LTE-A), SUPER 3G, IMT-Advanced, 4G, 5G, future radio access (FRA), W-CDMA (registered trademark), GSM (registered trademark), CDMA2000, Ultra Mobile Broadband (UMB), IEEE 802.11 (Wi-Fi), IEEE 802.16 (WiMAX), IEEE 802.20, Ultra-WideBand, Bluetooth (registered trademark), any other systems using an appropriate system and/or next generation systems expanded on the basis of these systems. Furthermore, a plurality of systems may be combined to be applied (for example, a combination of at least one of LTE and LTE-A, and 5G) .

The order of the processing procedures, the sequences, the flowcharts, etc., of each aspect/embodiment described in the specification may be changed as long as there is no inconsistency. For example, for the methods described in the specification, the elements of the various steps are presented in an exemplary order and are not limited to a specific order presented.

The specific operations that are described in the specification to be performed by the base station 200 may be performed by their upper nodes in some cases. In a network formed of one or more network nodes including a base station, it is apparent that the various operations performed for communication with the terminal may be performed by the base station and/or a network node other than the base station (e.g., MME or S-GW can be considered, however, not limited to these). In the above description, a case is exemplified in which there is one network node other than the base station. However, a combination of other network nodes (e.g., MME and S-GW) may be used.

Information, etc., may be output from a higher layer (or a lower layer) to a lower layer (a higher layer). Input and output may be performed through a plurality of network nodes.

Input and output information, etc., may be stored in a specific location (for example, a memory) and may be managed by a management table. The input and output information, etc., may be overwritten, updated, or rewritten. The output information, etc., may be erased. The input information, etc., may be transmitted to other apparatuses.

Determination may be made by a value (0 or 1) represented by one bit, may be made by a Boolean value (Boolean: true or false), and may be made by comparison of numerical values (comparison with a predetermined value, for example).

Each aspect/embodiment described in this specification may be used alone, may be used in combination, or may be used while being switched during the execution. Furthermore, notification of predetermined information (e.g., notification of "being X") is not limited to notification that is made explicitly, and the notification may be made implicitly (e.g., notification of the predetermined information is not performed).

The present invention is described in detail above. It is apparent to a person ordinarily skilled in the art that the present invention is not limited to the embodiments described in the specification. The present invention can be implemented as modifications and alterations without departing from the gist and scope of the present invention that are determined by the descriptions of the claims. Accordingly, the description of the present specification is for the purpose of illustration and does not have any restrictive meaning to the present invention.

The software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, etc., regardless of whether the software is referred to as software, firmware, middleware, microcode, hardware description language or other names.

Furthermore, software, instructions, etc., may be transmitted and received via a transmission medium. For example, when the software is transmitted from a website, server, or another remote source using at least one of wired technology such as coaxial cable, fiber optic cable, twisted pair and digital subscriber line (DSL) and wireless technology such as infrared, radio, and microwave, these wired and/or wireless technologies are included within the definition of the transmission medium.

Information, signals, and the like described in the present specification may be represented using any of various other techniques. For example, data, instructions, commands, information, signals, bits, symbols, chips, and the like mentioned in the entire description may be represented by voltage, current, electromagnetic waves, magnetic field or magnetic particles, optical field or photons, or any combination thereof.

Note that the terms described in this specification and/or the terms necessary for understanding of this specification may be replaced with terms having the same or similar meaning. For example, the channel and/or symbol may be signalling (signal). Furthermore, a signal may be a message. Furthermore, a component carrier (CC) may be referred to as a carrier frequency, a cell, etc.

The terms "system" and "network" as used in this specification are used interchangeably.

Furthermore, the information, parameters, etc., described in this specification may be represented by absolute values, may be represented as relative values from predetermined values, or may be represented by any other corresponding information. For example, the radio resource may be indicated by an index.

The names used for the above-described parameters are not for limiting in any point. Furthermore, mathematical expressions, etc., using these parameters may be different from those explicitly disclosed in this specification. Since the various channels (e.g., PUCCH, PDCCH, etc.) and information elements (e.g., TPC etc.) can be identified by suitable names, the various names assigned to these various channels and information elements are not for limiting in any point.

In the present disclosure, the terms, such as "base station (BS: Base Station)," "Radio Base Station," "Fixed Station," "Node B," "eNode B (eNB)," "gNode B (gNB)," "Access point," "transmission/reception point," "cell," "sector," "cell group," "Carrier," "component carrier," etc., may be used interchangeably. The base station may be referred to by the terms, such as a macro cell, a small cell, a femtocell, a picocell, etc.

A base station can accommodate one or more (e.g., three) cells (also referred to as sectors). When the base station accommodates a plurality of cells, the entire coverage area of the base station can be divided into a plurality of smaller areas, and each smaller area may also provide communication services by base station subsystem (e.g., indoor small base station RRH: Remote Radio Head). The term "cell" or "sector" refers to a part or all of the coverage area of a base station and/or base station subsystem that provides communication service in this coverage. Furthermore, the terms "base station," "eNB," "cell," and "sector" may be used interchangeably in this specification. The base station may also be referred to by the terms, such as a fixed station, a NodeB, eNodeB (eNB), an access point, a femtocell, a small cell, etc.

In the present disclosure, the terms, such as "mobile station (MS: Mobile Station)," "user terminal (user terminal)," "user equipment (UE: User Equipment)," "terminal," etc., may be used interchangeably.

A mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or it may also be called by some other suitable terms.

At least one of the base station and the mobile station may be referred to as a transmitting device, a receiving device, a communication device, etc. At least one of the base station and the mobile station may be a device mounted on the mobile body, the mobile body itself, etc. The mobile body may be a vehicle (for example, a car, an airplane, etc.), a mobile body that moves unmanned (for example, a drone, an automatically driven vehicle, etc.), or a robot (manned type or unmanned type). At least one of the base station and the mobile station also includes a device that does not necessarily move during the communication operation. For example, at least one of the base station and the mobile station may be an Internet of Things (IoT) device such as a sensor.

The base station in the present disclosure may be replaced with the user terminal. For example, each aspect/embodiment of the present disclosure may be applied to a configuration such that the communication between the base station and the user terminal is replaced with communication between a plurality of user terminals (for example, may be referred to as Device-to-Device (D2D), Vehicle-to-Everything (V2X), etc. In this case, the configuration may be such that functions of the above-described base station 10 are included in the user terminal 20. Additionally, the words, such as "uplink" and "downlink, may be replaced with words corresponding to inter-terminal communication (e.g., side). For example, an uplink channel, a downlink channel may be replaced with a side channel.

Similarly, the user terminal in the present disclosure may be replaced with the base station. In this case, the functions included in the above-described user terminal 20 may be included in the base station 10.

The terms "determine (determining)" and "decide (determining)" used in this specification may include various types of operations. For example, "determining" and "deciding" may include deeming that a result of calculating, computing, processing, deriving, investigating, looking up (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided.

The terms "connected," "coupled," or any variation thereof mean any direct or indirect connection or coupling between two or more elements, and may include the presence of one or more intermediate elements between the two elements "connected" or "coupled" to each other. The coupling or connection between the elements may be physical, logical or a combination thereof. Two elements, when used in this specification, can be considered to be mutually "connected" or "coupled by using one or more wires, cables and/or printed electrical connections, and, as some non-limiting and non-comprehensive examples, by using electromagnetic energy such as electromagnetic energy with a wavelength in a radio frequency range, a microwave range, and an optical range (both visible and invisible).

The reference signal may be abbreviated as RS (Reference Signal), and may be referred to as a pilot (Pilot) according to applicable standards.

The expression "on the basis of" used in the present specification does not mean "on the basis of only" unless otherwise stated particularly. In other words, the expression "on the basis of" means both "on the basis of only" and "on the basis of at least."

Any reference to elements using names, such as "first" and "second," as used in this specification does not generally limit the amount or order of those elements. These names can be used in this specification as a convenient way to distinguish between two or more elements. Accordingly, the reference to the first and second elements does not imply that only two elements can be adopted, or that the first element must precede the second element in some way.

"Means" in the configuration of each of the above-described devices may be replaced with "part," "circuit," "device," etc.

As long as "include," "including," and variations thereof are used in this specification or the claims, the terms are intended to be inclusive in a manner similar to the term "comprising." Furthermore, the term "or" used in the specification or claims is intended not to be an exclusive OR.

A radio frame may be formed of one or more frames in the time domain. In the time domain, each of the one or more frames may be referred to as a subframe. A subframe may further be formed of one or more slots in the time domain. A subframe may be a fixed time length (e.g., 1 ms) that does not depend on numerology.

The numerology may be a communication parameter to be applied to at least one of transmission or reception of a signal or a channel. The numerology may represent, for example, at least one of a subcarrier spacing (SCS: SubCarrier Spacing), a bandwidth, a symbol length, a cyclic prefix length, a transmission time interval (TTI: Transmission Time Interval), a symbol number per TTI, a radio frame configuration, a specific filtering process performed by a transceiver in a frequency domain, a specific windowing process performed by a transceiver in a time domain, etc.

A slot may be formed of, in a time domain, one or more symbols (OFDM (Orthogonal Frequency Division Multiplexing) symbols, SC-FDMA (Single Carrier Frequency Division Multiple Access) symbols, etc.). A slot may be a unit of time based on the numerology.

A slot may include a plurality of mini-slots. In a time domain, each mini-slot may be formed of one or more symbols. A mini-slot may also be referred to as a sub-slot. A mini-slot may be formed of fewer symbols than those of a slot. The PDSCH (or PUSCH) transmitted in a unit of time that is greater than a mini-slot may be referred to as PDSCH (or PUSCH) mapping type A. The PDSCH (or PUSCH) transmitted using a mini-slot may be referred to as PDSCH (or PUSCH) mapping type B.

Each of the radio frame, subframe, slot, mini-slot, and symbol represents a time unit for transmitting a signal. The radio frame, subframe, slot, mini-slot, and symbol may be called by respective different names.

For example, one subframe may be referred to as a transmission time interval (TTI: Transmission Time Interval), a plurality of consecutive subframes may be referred to as TTI, or one slot or one mini-slot may be referred to as TTI. Namely, at least one of a subframe and TTI may be a subframe (1 ms) in the existing LTE, may be a time interval shorter than 1 ms (e.g., 1 to 13 symbols), or a time interval longer than 1 ms. Note that the unit representing the TTI may be referred to as a slot, a mini-slot, etc., instead of a subframe.

Here, the TTI refers to, for example, the minimum time unit of scheduling in radio communication. For example, in the LTE system, the base station performs scheduling for allocating radio resources (such as a frequency bandwidth, transmission power, etc., that can be used in each user terminal) in units of TTIs to each user terminal. Note that the definition of the TTI is not limited to this.

The TTI may be a transmission time unit, such as a channel coded data packet (transport block), a code block, a codeword, etc., or may be a processing unit for scheduling, link adaptation, etc. Note that, when a TTI is provided, a time interval (e.g., a symbol number) onto which a transport block, a code block, or a code ward is actually mapped may be shorter than the TTI.

Note that, when one slot or one mini-slot is referred to as a TTI, one or more TTIs (i.e., one or more slots or one or more mini-slots) may be the minimum time unit of scheduling. Additionally, the number of slots (the number of mini-slots) forming the minimum time unit of scheduling may be controlled.

A TTI with a time length of 1 ms may be referred to as an ordinary TTI (TTI in LTE Rel. 8-12), a normal TTI, a long TTI, an ordinary subframe, a normal subframe, a long subframe, a slot, etc. A TTI that is shorter than a normal TTI may be referred to as a shortened TTI, a short TTI, a partial TTI (partial TTI or fractional TTI), a shortened subframe, a short subframe, a mini-slot, a sub-slot, a slot, etc.

Note that a long TTI (e.g., a normal TTI, a subframe, etc.) may be replaced with a TTI with a time length exceeding 1 ms, and a short TTI (e.g., a shortened TTI, etc.) may be replaced with a TTI with a TTI length that is shorter than the TTI length of the long TTI and longer than or equal to 1 ms.

A resource block (RB) is a resource allocation unit in the time domain and the frequency domain, and may include one or more consecutive subcarriers in the frequency domain. A number of subcarriers included in a RB may be the same irrespective of numerology, and may be 12, for example. The number of subcarriers included in a RB may be determined based on numerology.

Additionally, the resource block may include one or more symbols in the time domain, and may have a length of one slot, one mini-slot, one subframe, or one TTI. Each of one TTI and one subframe may be formed of one or more resource blocks.

Note that one or more RBs may be referred to as a physical resource block (PRB: Physical RB), a subcarrier group (SCG: Sub-Carrier Group), a resource element group (REG: Resource Element Group), a PRB pair, a RB pair, etc.

Additionally, a resource block may be formed of one or more resource elements (RE: Resource Element). For example, 1 RE may be a radio resource area of 1 subcarrier and 1 symbol.

A bandwidth part (BWP: Bandwidth Part) (which may also be referred to as a partial bandwidth, etc.) may represent, in a certain carrier, a subset of consecutive common RB (common resource blocks) for a certain numerology. Here, the common RB may be specified by an index of a RB when a common reference point of the carrier is used as a reference. A PRB may be defined in a BWP, and may be numbered in the BWP.

The BWP may include a BWP for UL (UL BWP) and a BWP for DL (DL BWP). For a UE, one or more BWPs may be configured within one carrier.

At least one of the configured BWPs may be active, and the UE is not required to assume that a predetermined signal/channel is communicated outside the active BWP. Note that "cell," "carrier," etc. in the present disclosure may be replaced with "BWP."

The structures of the above-described radio frame, subframe, slot, mini-slot, symbol, etc., are merely illustrative. For example, the following configurations can be variously changed: the number of subframes included in the radio frame; the number of slots per subframe or radio frame; the number of mini-slots included in the slot; the number of symbols and RBs included in the slot or mini-slot; the number of subcarriers included in the RB; and the number of symbols, the symbol length, the cyclic prefix (CP: Cyclic Prefix) length, etc., within the TTI.

The "maximum transmission power" described in the present disclosure may imply the maximum value of the transmission power; the nominal maximum transmission power (the nominal UE maximum transmit power); or the maximum rated transmission power (the rated UE maximum transmit power).

In the present disclosure, for example, if an article is added by translation, such as a, an, and the in English, the present disclosure may include that the noun following the article is plural.

In the present disclosure, the term "A and B are different" may imply that "A and B are different from each other." Note that the term may also imply "each of A and B is different from C." The terms, such as "separated," "coupled," etc., may also be interpreted similarly.

The embodiments of the invention are described above in detail. However, the invention is not limited to the specific embodiments, and various modifications and changes may be made within a range of the gist of the invention described in the claims.

This international patent application is based on and claims priority to Japanese Patent Application No. 2017-187192 filed on September 27, 2017, and the entire content of Japanese Patent Application No. 2017-187192 is incorporated herein by reference.

### LIST OF REFERENCE SYMBOLS

- 10: radio communication system

- 100, 100A, 100B: user equipment
- 200: base station
- 300: positioning system
- 400: interfered system

## Claims

1. User equipment comprising:
a controller that controls a radio communication with a base station; and
a transmitter that reports, to the base station, interfered system information representing an interfered system that is interfered by multi-Radio Access Technology (RAT) dual connectivity.

2. The user equipment according to claim 1, wherein the interfered system information represents a type of the interfered system that is interfered by the multi-RAT dual connectivity.

3. The user equipment according to claim 1, wherein the interfered system information represents a carrier frequency of the interfered system that is interfered by the multi-RAT dual connectivity.

4. The user equipment according to claim 1, wherein, in response to receiving, by the user equipment, configuration information for reporting the interfered system information, the transmitter reports the interfered system information to the base station.

5. An interference coordination method comprising:
controlling, by user equipment, a radio communication with a base station; and
reporting, by the user equipment, interfered system information representing an interfered system that is interfered by multi-Radio Access Technology (RAT) dual connectivity to the base station.
